# EUROPEAN PATENT APPLICATION

(11) **EP 4 408 052 A1**
(43) Date of publication of application: **31.07.2024**
(21) Application number: 22882295.3
(22) Date of filing: 27.05.2022
(51) Int. Cl.: H04W 12/08

(54) **METHOD AND APPARATUS FOR REMOTE ATTESTATION, DEVICE, SYSTEM AND READABLE STORAGE MEDIUM**

(30) Priority: 19.10.2021 CN 202111217700; 29.11.2021 CN 202111432802
(71) Applicant: Huawei Technologies Co., Ltd., Shenzhen, Guangdong 518129 (CN)
(72) Inventor: WU, Di, Shenzhen, Guangdong 518129 (CN); CAO, Bin, Shenzhen, Guangdong 518129 (CN); ZHANG, Yijiong, Shenzhen, Guangdong 518129 (CN)
(74) Representative: MERH-IP Matias Erny Reichl Hoffmann Patentanwälte PartG mbB
(86) International application number: PCT/CN2022/095526
(87) International publication number: WO 2023/065670

(57) **Abstract**

This application discloses a remote attestation method, apparatus, device, and system, and a readable storage medium, and pertains to the field of information technologies. The method includes: A first network element device having a route reflection function sends, to a second network element device through a BGP connection, a first BGP packet used to query measurement information of the second network element device. A BGP connection for route reflection is established between the first network element device and the second network element device. The first network element device receives, through the BGP connection, a second BGP packet sent by the second network element device, and parses the second BGP packet to obtain the measurement information carried in the second BGP packet. The first network element device compares the measurement information and a remote attestation baseline file, to obtain a remote attestation result. In this application, remote attestation is performed on the second network element device by using the first network element device having the route reflection function and the BGP connection for route reflection, to reduce costs and improve remote attestation efficiency.

## Description

This application claims priority to Chinese Patent Application No. 202111217700.2, filed with the China National Intellectual Property Administration on October 19, 2021 and entitled "REMOTE ATTESTATION METHOD AND SYSTEM, AND RELATED APPARATUS", which is incorporated herein by reference in its entirety. This application claims priority to Chinese Patent Application No. 202111432802.6, filed with the China National Intellectual Property Administration on November 29, 2021 and entitled "REMOTE ATTESTATION METHOD, APPARATUS, DEVICE, AND SYSTEM, AND READABLE STORAGE MEDIUM", which is incorporated herein by reference in its entirety.

### TECHNICAL FIELD

This application relates to the field of information technologies, and in particular, to a remote attestation method, apparatus, device, and system, and a readable storage medium.

### BACKGROUND

With continuous development of information technologies, an information security problem has become a focus of attention, and trusted computing (trusted computing) emerges. One solution to trusted computing includes a remote attestation (remote attestation, RA) process. In the RA process, a RA client (client) sends data to a RA server (server). The data is generated by a device serving as the RA client. The RA server determines, based on the received data, whether the device serving as the RA client is in a trusted state, to resolve the information security problem.

In the conventional technology, a device for which whether the device is in a trusted state needs to be determined serves as the RA client, an independently deployed device serves as the RA server, and a dedicated connection between the RA client and the RA server is manually established. The dedicated connection is dedicated to implementing the foregoing RA process.

However, costs are high when the independently deployed device serves as the RA server, and steps of manually establishing the dedicated connection between the RA client and the RA server are complex. Consequently, RA efficiency is low.

### SUMMARY

This application provides a remote attestation method, apparatus, device, and system, and a readable storage medium, to resolve problems of high costs and low RA efficiency in the conventional technology. Technical solutions are as follows:

According to a first aspect, a remote attestation method is provided. The method is applied to a first network element device having a route reflection function, a BGP connection for route reflection is established between the first network element device and a second network element device, and the method includes: The first network element device sends, to the second network element device through the BGP connection, a first BGP packet used to query measurement information of the second network element device. The first network element device receives, through the BGP connection, a second BGP packet sent by the second network element device, and parses the second BGP packet to obtain the measurement information carried in the second BGP packet. The first network element device compares the measurement information and a remote attestation baseline file, to obtain a remote attestation result.

In this embodiment of this application, the first network element device having the route reflection function performs remote attestation on the second network element device through the BGP connection for route reflection. There is no need to deploy another additional device (for example, a dedicated remote attestation server or an independent remote attestation server) other than the first network element device and the second network element device, and there is no need to manually establish a dedicated connection used to perform remote attestation. In this way, not only costs are reduced, but also remote attestation efficiency is improved.

In a possible implementation, the first BGP packet includes a first TLV field, and the first TLV field indicates to query the measurement information.

In a possible implementation, the first BGP packet is a first update packet, the first update packet includes a first path attribute field, and the first TLV field is located in the first path attribute field. The first update packet is an update-type BGP packet. In this application, the update-type BGP packet is extended, so that the update-type BGP packet can carry, by using a path attribute field, the first TLV field indicating to query the measurement information.

In this embodiment of this application, a measurement information query function is implemented by extending a BGP packet.

In a possible implementation, the second BGP packet includes a second TLV field, and the second TLV field is used to carry the measurement information.

In a possible implementation, the second BGP packet is a second update packet, the second update packet includes a second path attribute field, and the second TLV field is located in the second path attribute field. The second update packet is an update-type BGP packet. In this application, the update-type BGP packet is extended, so that the update-type BGP packet can carry, by using a path attribute field, the second TLV field used to carry the measurement information.

In this embodiment of this application, a measurement information carrying function is implemented by extending a BGP packet.

In a possible implementation, that the first network element device sends a first BGP packet to the second network element device through the BGP connection includes: The first network element device establishes a secure connection to the second network element device through the BGP connection, and sends the first BGP packet to the second network element device through the secure connection; and that the first network element device receives, through the BGP connection, a second BGP packet sent by the second network element device includes: The first network element device receives, through the secure connection, the second BGP packet sent by the second network element device. The secure connection is established between the first network element device and the second network element device, to provide transmission security of the first BGP packet and the second BGP packet, and ensure accuracy of the remote attestation result.

In a possible implementation, the secure connection includes a TLS connection or an IP Sec tunnel.

In a possible implementation, that the first network element device establishes a secure connection to the second network element device through the BGP connection includes: In response to determining that the second network element device supports a remote attestation function, the first network element device sends a secure connection establishment request to the second network element device through the BGP connection, and establishes the secure connection to the second network element device based on the secure connection establishment request. The secure connection is established when it is determined that the second network element device supports the remote attestation function, to avoid a case in which the secure connection is established but the second network element device does not support the remote attestation function, and avoid a waste of a transmission bandwidth and device processing resources.

In a possible implementation, that the second network element device supports the remote attestation function includes: version information corresponding to the second network element device matches version information corresponding to the remote attestation baseline file, and/or the second network element device has an address family extension capability.

In a possible implementation, before the first network element device sends a first BGP packet to the second network element device through the BGP connection, the method further includes: The first network element device sends a third BGP packet to the second network element device through the BGP connection. The third BGP packet indicates to query the version information corresponding to the second network element device. The first network element device receives, through the BGP connection, a fourth BGP packet sent by the second network element device, and parses the fourth BGP packet to obtain the version information that corresponds to the second network element device and that is carried in the fourth BGP packet. In response to that the version information corresponding to the second network element device is the same as the version information corresponding to the remote attestation baseline file, the first network element device determines that the second network element device supports the remote attestation function.

In this embodiment of this application, the first network element device having the route reflection function performs a query by reusing the BGP connection, so that costs of performing a manner of determining that the second network element device supports the remote attestation function are low, and there is better timeliness.

In a possible implementation, the third BGP packet includes a third TLV field, and the third TLV field indicates to query the version information.

In a possible implementation, the third BGP packet is a third update packet, the third update packet includes a third path attribute field, and the third TLV field is located in the third path attribute field. The third update packet is an update-type BGP packet. In this application, the update-type BGP packet is extended, so that the update-type BGP packet can carry, by using a path attribute field, the third TLV field used to query the version information.

In this embodiment of this application, a version information query function is implemented by extending a BGP packet.

In a possible implementation, the fourth BGP packet includes a fourth TLV field, and the fourth TLV field is used to carry the version information corresponding to the second network element device.

In a possible implementation, the fourth BGP packet is a fourth update packet, the fourth update packet includes a fourth path attribute field, and the fourth TLV field is located in the fourth path attribute field. The fourth update packet is an update-type BGP packet. In this application, the update-type BGP packet is extended, so that the update-type BGP packet can carry, by using a path attribute field, the fourth TLV field used to carry the version information.

In a possible implementation, the version information corresponding to the second network element device includes subversion information of at least one component in the second network element device, subversion information of any component in the at least one component includes at least one type of information in a software version and a hardware version, the fourth TLV field is used to carry an information list, the information list includes at least one information item, and any information item in the at least one information item includes a component name of the any component and subversion information of the any component.

In this embodiment of this application, a version information carrying function is implemented by extending a BGP packet.

In a possible implementation, before the first network element device sends a first BGP packet to the second network element device through the BGP connection, the method further includes: The first network element device sends a fifth BGP packet to the second network element device through the BGP connection. The fifth BGP packet is used to negotiate the address family extension capability with the second network element device. The first network element device receives, through the BGP connection, a sixth BGP packet sent by the second network element device, and determines, based on the sixth BGP packet, that the second network element device has the address family extension capability, so that the second network element device supports the remote attestation function.

In a possible implementation, the fifth BGP packet includes at least one first capability subfield, any one of the at least one first capability subfield carries an address family identifier, and the address family identifier indicates an extended address family.

In a possible implementation, the fifth BGP packet is a first open packet, the first open packet includes a first optional parameter field, and the at least one first capability subfield is located in the first optional parameter field. The fifth update packet is an open-type BGP packet. In this application, the open-type BGP packet is extended, so that the open-type BGP packet can carry, by using an optional parameter field, the at least one first capability subfield used to carry an address family identifier.

In a possible implementation, the sixth BGP packet includes at least one second capability subfield that carries an address family identifier.

In a possible implementation, a packet type of the sixth BGP packet is an open type, the sixth BGP packet includes a second optional parameter field, and in response to that the sixth BGP packet includes the at least one second capability subfield that carries an address family identifier, the at least one second capability subfield that carries an address family identifier is located in the second optional parameter field. The sixth update packet is an open-type BGP packet. In this application, the open-type BGP packet is extended, so that the open-type BGP packet can carry, by using an optional parameter field, the at least one second capability subfield used to carry an address family identifier.

In a possible implementation, the determining, based on the sixth BGP packet, that the second network element device has the address family extension capability includes: The first network element device parses the sixth BGP packet; and in response to that the sixth BGP packet includes the at least one second capability subfield that carries an address family identifier, the first network element device determines that the second network element device has the address family extension capability.

In this embodiment of this application, a function of negotiating the address family extension capability by the first network element device and the second network element device is implemented by extending a BGP packet.

In a possible implementation, the remote attestation baseline file is received by the first network element device, or the remote attestation baseline file is generated by the first network element device based on measurement information of the first network element device. The first network element device may obtain the remote attestation baseline file in two different manners. This is flexible.

According to a second aspect, a remote attestation method is provided. The method is applied to a second network element device, a BGP connection for route reflection is established between the second network element device and a first network element device, the first network element device has a route reflection function, and the method includes:

The second network element device receives, through the BGP connection, a first BGP packet sent by the first network element device. The first BGP packet is used to query measurement information of the second network element device.

The second network element device sends a second BGP packet to the first network element device through the BGP connection. The second BGP packet carries the measurement information, so that the first network element device obtains a remote attestation result corresponding to the second network element device.

In this embodiment of this application, the second network element device sends, through the BGP connection for route reflection, the measurement information to the first network element device having the route reflection function, to perform remote attestation on the second network element device. There is no need to deploy another additional device other than the first network element device and the second network element device, and there is no need to manually establish a dedicated connection used to perform remote attestation. In this way, not only costs are reduced, but also remote attestation efficiency is improved.

In a possible implementation, the first BGP packet includes a first TLV field, and the first TLV field indicates to query the measurement information.

In a possible implementation, the first BGP packet is a first update packet, the first update packet includes a first path attribute field, and the first TLV field is located in the first path attribute field.

In a possible implementation, the second BGP packet includes a second TLV field, and the second TLV field is used to carry the measurement information.

In a possible implementation, the second BGP packet is a second update packet, the second update packet includes a second path attribute field, and the second TLV field is located in the second path attribute field.

In a possible implementation, that the second network element device receives, through the BGP connection, a first BGP packet sent by the first network element device includes: The second network element device establishes a secure connection to the first network element device through the BGP connection, and receives, through the secure connection, the first BGP packet sent by the first network element device. That the second network element device sends a second BGP packet to the first network element device through the BGP connection includes: The second network element device sends the second BGP packet to the first network element device through the secure connection.

In a possible implementation, the secure connection includes a TLS connection or an IP Sec tunnel.

In a possible implementation, that the second network element device establishes a secure connection to the first network element device through the BGP connection includes: The second network element device receives, through the BGP connection, a secure connection establishment request sent by the first network element device, and establishes the secure connection to the first network element device based on the secure connection establishment request.

In a possible implementation, version information corresponding to the second network element device matches version information corresponding to a remote attestation baseline file on the first network element device, and/or the second network element device has an address family extension capability, and the remote attestation baseline file is used to obtain a remote attestation result corresponding to the second network element device.

In a possible implementation, before the second network element device receives, through the BGP connection, a first BGP packet sent by the first network element device, the method further includes: The second network element device receives, through the BGP connection, a third BGP packet sent by the first network element device. The third BGP packet indicates to query the version information corresponding to the second network element device. The second network element device sends a fourth BGP packet to the first network element device through the BGP connection. The fourth BGP packet carries the version information corresponding to the second network element device.

In a possible implementation, the third BGP packet includes a third TLV field, and the third TLV field indicates to query the version information.

In a possible implementation, the third BGP packet is a third update packet, the third update packet includes a third path attribute field, and the third TLV field is located in the third path attribute field.

In a possible implementation, the fourth BGP packet includes a fourth TLV field, and the fourth TLV field is used to carry the version information corresponding to the second network element device.

In a possible implementation, the fourth BGP packet is a fourth update packet, the fourth update packet includes a fourth path attribute field, and the fourth TLV field is located in the fourth path attribute field.

In a possible implementation, the version information corresponding to the second network element device includes subversion information of at least one component in the second network element device, subversion information of any component in the at least one component includes at least one type of information in a software version and a hardware version, the fourth TLV field is used to carry an information list, the information list includes at least one information item, and any information item in the at least one information item includes a component name of the any component and subversion information of the any component.

In a possible implementation, before the second network element device receives, through the BGP connection, a first BGP packet sent by the first network element device, the method further includes: The second network element device receives, through the BGP connection, a fifth BGP packet sent by the first network element device. The fifth BGP packet is used to negotiate the address family extension capability with the first network element device. The second network element device generates a sixth BGP packet based on the address family extension capability of the second network element device, and sends the sixth BGP packet to the first network element device through the BGP connection.

In a possible implementation, the fifth BGP packet includes at least one first capability subfield, any one of the at least one first capability subfield carries an address family identifier, and the address family identifier indicates an extended address family.

In a possible implementation, the fifth BGP packet is a first open packet, the first open packet includes a first optional parameter field, and the at least one first capability subfield is located in the first optional parameter field.

In a possible implementation, the sixth BGP packet includes at least one second capability subfield that carries an address family identifier, and the address family identifier indicates an extended address family.

In a possible implementation, a packet type of the sixth BGP packet is an open type, the sixth BGP packet includes a second optional parameter field, and in response to that the sixth BGP packet includes the at least one second capability subfield that carries an address family identifier, the at least one second capability subfield that carries an address family identifier is located in the second optional parameter field.

In a possible implementation, that the second network element device generates a sixth BGP packet based on the address family extension capability of the second network element device includes: In response to determining that the second network element device has the address family extension capability, the second network element device sends, to the first network element device, the sixth BGP packet including the at least one second capability subfield that carries an address family identifier.

In a possible implementation, the remote attestation baseline file is received by the first network element device, or the remote attestation baseline file is generated by the first network element device based on measurement information of the first network element device.

According to a third aspect, a remote attestation apparatus is provided. The apparatus is used in a first network element device having a route reflection function, a BGP connection for route reflection is established between the first network element device and a second network element device, and the apparatus includes:
a sending module, configured to send, by the first network element device, a first BGP packet to the second network element device through the BGP connection, where the first BGP packet is used to query measurement information of the second network element device;
a receiving module, configured to: receive, by the first network element device through the BGP connection, a second BGP packet sent by the second network element device, and parse the second BGP packet to obtain the measurement information carried in the second BGP packet; and
a comparison module, configured to compare, by the first network element device, the measurement information and a remote attestation baseline file, to obtain a remote attestation result.

In a possible implementation, the first BGP packet includes a first TLV field, and the first TLV field indicates to query the measurement information.

In a possible implementation, the first BGP packet is a first update packet, the first update packet includes a first path attribute field, and the first TLV field is located in the first path attribute field.

In a possible implementation, the second BGP packet includes a second TLV field, and the second TLV field is used to carry the measurement information.

In a possible implementation, the second BGP packet is a second update packet, the second update packet includes a second path attribute field, and the second TLV field is located in the second path attribute field.

In a possible implementation, the sending module is configured to: establish, by the first network element device, a secure connection to the second network element device through the BGP connection, and send the first BGP packet to the second network element device through the secure connection; and
the receiving module is configured to receive, by the first network element device through the secure connection, the second BGP packet sent by the second network element device.

In a possible implementation, the secure connection includes a TLS connection or an IP Sec tunnel.

In a possible implementation, the sending module is configured to: in response to determining that the second network element device supports a remote attestation function, send, by the first network element device, a secure connection establishment request to the second network element device through the BGP connection, and establish the secure connection to the second network element device based on the secure connection establishment request.

In a possible implementation, that the second network element device supports a remote attestation function includes: version information corresponding to the second network element device matches version information corresponding to the remote attestation baseline file, and/or the second network element device has an address family extension capability.

In a possible implementation, the sending module is further configured to send, by the first network element device, a third BGP packet to the second network element device through the BGP connection, where the third BGP packet indicates to query the version information corresponding to the second network element device;
the receiving module is further configured to: receive, by the first network element device through the BGP connection, a fourth BGP packet sent by the second network element device, and parse the fourth BGP packet to obtain the version information that corresponds to the second network element device and that is carried in the fourth BGP packet; and
the apparatus further includes a first determining module, configured to: in response to that the version information corresponding to the second network element device is the same as the version information corresponding to the remote attestation baseline file, determine, by the first network element device, that the second network element device supports the remote attestation function.

In a possible implementation, the third BGP packet includes a third TLV field, and the third TLV field indicates to query the version information.

In a possible implementation, the third BGP packet is a third update packet, the third update packet includes a third path attribute field, and the third TLV field is located in the third path attribute field.

In a possible implementation, the fourth BGP packet includes a fourth TLV field, and the fourth TLV field is used to carry the version information corresponding to the second network element device.

In a possible implementation, the fourth BGP packet is a fourth update packet, the fourth update packet includes a fourth path attribute field, and the fourth TLV field is located in the fourth path attribute field.

In a possible implementation, the version information corresponding to the second network element device includes subversion information of at least one component in the second network element device, subversion information of any component in the at least one component includes at least one type of information in a software version and a hardware version, the fourth TLV field is used to carry an information list, the information list includes at least one information item, and any information item in the at least one information item includes a component name of the any component and subversion information of the any component.

In a possible implementation, the sending module is further configured to send, by the first network element device, a fifth BGP packet to the second network element device through the BGP connection, where the fifth BGP packet is used to negotiate the address family extension capability with the second network element device;
the receiving module is further configured to receive, by the first network element device through the BGP connection, a sixth BGP packet sent by the second network element device; and
the apparatus further includes a second determining module, configured to determine, based on the sixth BGP packet, that the second network element device has the address family extension capability, so that the second network element device supports the remote attestation function.

In a possible implementation, the fifth BGP packet includes at least one first capability subfield, any one of the at least one first capability subfield carries an address family identifier, and the address family identifier indicates an extended address family.

In a possible implementation, the fifth BGP packet is a first open packet, the first open packet includes a first optional parameter field, and the at least one first capability subfield is located in the first optional parameter field.

In a possible implementation, the sixth BGP packet includes at least one second capability subfield that carries an address family identifier.

In a possible implementation, a packet type of the sixth BGP packet is an open type, the sixth BGP packet includes a second optional parameter field, and in response to that the sixth BGP packet includes the at least one second capability subfield that carries an address family identifier, the at least one second capability subfield that carries an address family identifier is located in the second optional parameter field.

In a possible implementation, the second determining module is configured to: parse, by the first network element device, the sixth BGP packet; and in response to that the sixth BGP packet includes the at least one second capability subfield that carries an address family identifier, determine, by the first network element device, that the second network element device has the address family extension capability.

In a possible implementation, the remote attestation baseline file is received by the first network element device, or the remote attestation baseline file is generated by the first network element device based on measurement information of the first network element device.

According to a fourth aspect, a remote attestation apparatus is provided. The apparatus is used in a second network element device, a BGP connection for route reflection is established between the second network element device and a first network element device, the first network element device has a route reflection function, and the apparatus includes:
a receiving module, configured to receive, by the second network element device through the BGP connection, a first BGP packet sent by the first network element device, where the first BGP packet is used to query measurement information of the second network element device; and
a sending module, configured to send, by the second network element device, a second BGP packet to the first network element device through the BGP connection, where the second BGP packet carries the measurement information, so that the first network element device obtains a remote attestation result corresponding to the second network element device.

In a possible implementation, the first BGP packet includes a first TLV field, and the first TLV field indicates to query the measurement information.

In a possible implementation, the first BGP packet is a first update packet, the first update packet includes a first path attribute field, and the first TLV field is located in the first path attribute field.

In a possible implementation, the second BGP packet includes a second TLV field, and the second TLV field is used to carry the measurement information.

In a possible implementation, the second BGP packet is a second update packet, the second update packet includes a second path attribute field, and the second TLV field is located in the second path attribute field.

In a possible implementation, the receiving module is configured to: establish, by the second network element device, a secure connection to the first network element device through the BGP connection, and receive, through the secure connection, the first BGP packet sent by the first network element device; and
the sending module is configured to send, by the second network element device, the second BGP packet to the first network element device through the secure connection.

In a possible implementation, the secure connection includes a TLS connection or an IP Sec tunnel.

In a possible implementation, the receiving module is further configured to: receive, by the second network element device through the BGP connection, a secure connection establishment request sent by the first network element device, and establish a secure connection to the first network element device based on the secure connection establishment request.

In a possible implementation, version information corresponding to the second network element device matches version information corresponding to a remote attestation baseline file on the first network element device, and/or the second network element device has an address family extension capability, and the remote attestation baseline file is used to obtain a remote attestation result corresponding to the second network element device.

In a possible implementation, the receiving module is further configured to receive, by the second network element device through the BGP connection, a third BGP packet sent by the first network element device, where the third BGP packet indicates to query the version information corresponding to the second network element device; and
the sending module is further configured to send, by the second network element device, a fourth BGP packet to the first network element device through the BGP connection, where the fourth BGP packet carries the version information corresponding to the second network element device.

In a possible implementation, the third BGP packet includes a third TLV field, and the third TLV field indicates to query the version information.

In a possible implementation, the third BGP packet is a third update packet, the third update packet includes a third path attribute field, and the third TLV field is located in the third path attribute field.

In a possible implementation, the fourth BGP packet includes a fourth TLV field, and the fourth TLV field is used to carry the version information corresponding to the second network element device.

In a possible implementation, the fourth BGP packet is a fourth update packet, the fourth update packet includes a fourth path attribute field, and the fourth TLV field is located in the fourth path attribute field.

In a possible implementation, the version information corresponding to the second network element device includes subversion information of at least one component in the second network element device, subversion information of any component in the at least one component includes at least one type of information in a software version and a hardware version, the fourth TLV field is used to carry an information list, the information list includes at least one information item, and any information item in the at least one information item includes a component name of the any component and subversion information of the any component.

In a possible implementation, the receiving module is further configured to receive, by the second network element device through the BGP connection, a fifth BGP packet sent by the first network element device, where the fifth BGP packet is used to negotiate the address family extension capability with the first network element device; and
the sending module is further configured to: generate, by the second network element device, a sixth BGP packet based on the address family extension capability of the second network element device, and send the sixth BGP packet to the first network element device through the BGP connection.

In a possible implementation, the fifth BGP packet includes at least one first capability subfield, any one of the at least one first capability subfield carries an address family identifier, and the address family identifier indicates an extended address family.

In a possible implementation, the fifth BGP packet is a first open packet, the first open packet includes a first optional parameter field, and the at least one first capability subfield is located in the first optional parameter field.

In a possible implementation, the sixth BGP packet includes at least one second capability subfield that carries an address family identifier, and the address family identifier indicates an extended address family.

In a possible implementation, a packet type of the sixth BGP packet is an open type, the sixth BGP packet includes a second optional parameter field, and in response to that the sixth BGP packet includes the at least one second capability subfield that carries an address family identifier, the at least one second capability subfield that carries an address family identifier is located in the second optional parameter field.

In a possible implementation, the sending module is configured to: in response to determining that the second network element device has the address family extension capability, send, by the second network element device to the first network element device, the sixth BGP packet including the at least one second capability subfield that carries an address family identifier.

In a possible implementation, the remote attestation baseline file is received by the first network element device, or the remote attestation baseline file is generated by the first network element device based on measurement information of the first network element device.

According to a fifth aspect, a remote attestation device is provided. The device includes a memory and a processor, the memory stores at least one instruction, and the at least one instruction is loaded and executed by the processor, so that the remote attestation device implements the remote attestation method in any one of the first aspect or the possible implementations of the first aspect.

According to a sixth aspect, a remote attestation device is provided. The device includes a memory and a processor, the memory stores at least one instruction, and the at least one instruction is loaded and executed by the processor, so that the remote attestation device implements the remote attestation method in any one of the second aspect or the possible implementations of the second aspect.

According to a seventh aspect, a remote attestation device is provided. The device includes a network interface, a memory, and a processor. The network interface, the memory, and the processor communicate with each other through an internal connection path. The network interface is configured to send or receive a packet under the control of the processor. The memory is configured to store instructions, and when the instructions are executed by the processor, the device is enabled to perform the method in any one of the first aspect or the possible implementations of the first aspect.

According to an eighth aspect, a remote attestation device is provided. The device includes a network interface, a memory, and a processor. The network interface, the memory, and the processor communicate with each other through an internal connection path. The network interface is configured to send or receive a packet under the control of the processor. The memory is configured to store instructions. When the instructions are executed by the processor, the device is enabled to perform the method in any one of the second aspect or the possible implementations of the second aspect.

Optionally, one or more processors exist, and one or more memories exist.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be disposed on different chips. A type of the memory and a manner of disposing the memory and the processor are not limited in this application.

According to a ninth aspect, a remote attestation system is provided. The system includes a first remote attestation device and at least one second remote attestation device, the first remote attestation device has a route reflection function, a border gateway protocol BGP connection for route reflection is established between the first remote attestation device and each of the at least one second remote attestation device, the first remote attestation device is configured to perform the method in any one of the first aspect or the possible implementations of the first aspect, and any one of the at least one second remote attestation device is configured to perform the method in any one of the second aspect or the possible implementations of the second aspect.

According to a tenth aspect, a computer-readable storage medium is provided. The computer-readable storage medium stores at least one instruction, and the instruction is loaded and executed by a processor, so that a computer implements the method in the foregoing aspects.

According to an eleventh aspect, a computer program product is provided. The computer program product includes a computer program or instructions, and the computer program or the instructions are executed by a processor, so that a computer implements the method in the foregoing aspects.

According to a twelfth aspect, a chip is provided, including a processor, configured to: invoke, from a memory, instructions stored in the memory, and run the instructions, so that a device in which the chip is installed performs the method in the foregoing aspects.

According to a thirteenth aspect, another chip is provided, including an input interface, an output interface, a processor, and a memory. The input interface, the output interface, the processor, and the memory are connected through an internal connection path. The processor is configured to execute code in the memory, and when the code is executed, the processor is configured to perform the method in the foregoing aspects.

### BRIEF DESCRIPTION OF DRAWINGS

FIG. 1 is a schematic diagram of a structure of a remote attestation system according to an embodiment of this application;
FIG. 2 is a schematic diagram of a structure of a RA client and a RA server according to an embodiment of this application;
FIG. 3 is a schematic diagram of a structure of a second network element device according to an embodiment of this application;
FIG. 4 is a schematic flowchart of a remote attestation method according to an embodiment of this application;
FIG. 5 is a schematic diagram of a structure of a BGP packet header according to an embodiment of this application;
FIG. 6 is a schematic diagram of a structure of an update-type BGP packet according to an embodiment of this application;
FIG. 7A and FIG. 7B are a schematic flowchart of a remote attestation method according to an embodiment of this application;
FIG. 8 is a schematic diagram of a structure of an open-type BGP packet according to an embodiment of this application;
FIG. 9A and FIG. 9B are a schematic flowchart of a remote attestation method according to an embodiment of this application;
FIG. 10 is a schematic diagram of a structure of a remote attestation apparatus according to an embodiment of this application;
FIG. 11 is a schematic diagram of a structure of a remote attestation apparatus according to an embodiment of this application; and
FIG. 12 is a schematic diagram of a structure of a remote attestation device according to an embodiment of this application.

### DESCRIPTION OF EMBODIMENTS

Terms used in embodiments of this application are only used to explain specific embodiments of this application, but are not intended to limit this application.

With continuous development of information technologies, an information security problem has become a focus of attention. In all information security problems, there are many information security problems in terms of software. For example, the information security problem in terms of the software includes: A malicious plug-in is embedded into service software, and the service software is tampered with by using the malicious plug-in, to affect integrity and authenticity of the service software. Once the service software embedded with the malicious plug-in runs in an operating system of a device, the operating system may be damaged, so that the device to which the operating system belongs is in an untrusted state. In view of this, a trusted computing group (trusted computing group, TCG) promotes and develops a technology referred to as trusted computing. In trusted computing, whether the device is in a trusted state is verified by determining whether the service software is tampered with, to resolve the information security problem. One solution to trusted computing relates to a RA process.

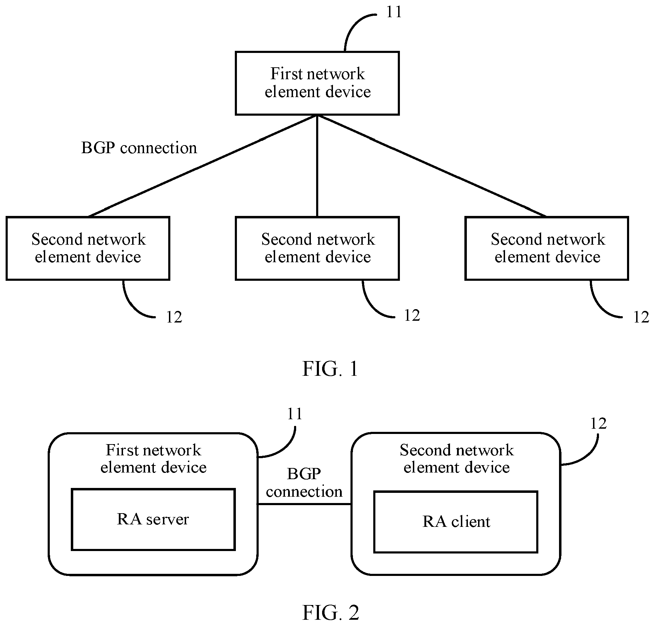

An embodiment of this application provides a remote attestation method. The method is applied to a remote attestation system shown in FIG. 1. In FIG. 1, the system includes a first network element device 11 and at least one second network element device 12. The first network element device 11 has a route reflection (route reflection, RR) function. A border gateway protocol (border gateway protocol, BGP) connection for route reflection is established between the first network element device 11 and each of the at least one second network element device 12.

As shown in FIG. 2, the first network element device 11 plays a role of a RA server, or the first network element device 11 has a function of a RA server. The second network element device 12 serves as a RA client. The BGP connection is established between the first network element device 11 and the second network element device 12, and the RA server and the RA client can communicate through the BGP connection, that is, transmit a BGP packet through the BGP connection, to implement a RA process. In the RA process, the first network element device 11 serving as the RA server sends, through the BGP connection, a first BGP packet to the second network element device 12 serving as the RA client. The first BGP packet is used to query measurement information of the second network element device 12. The second network element device 12 serving as the RA client receives the first BGP packet through the BGP connection, and sends, through the BGP connection, a second BGP packet to the first network element device 11 serving as the RA server. The second BGP packet carries the measurement information. The first network element device 11 serving as the RA server receives the second BGP packet, parses the second BGP packet to obtain the measurement information carried in the second BGP packet, and compares the measurement information and a remote attestation baseline file, to obtain a remote attestation result. The remote attestation result indicates whether the second network element device 12 is in a trusted state.

In this embodiment of this application, because the first network element device has a route reflection function, the BGP connection for route reflection is established between the first network element device and each of other network element devices including the second network element device. In a route reflection process, the second network element device sends, to the first network element device through the BGP connection, a route that needs to be distributed, and another network element device also sends, to the first network element device through the BGP connection, a route that needs to be distributed. The first network element device selects a proper route through route learning and processing, and reflects the proper route to all network element devices that have established a BGP connection to the first network element device, so that a route transfer is implemented without forming a full mesh, to reduce network overheads and improve network scalability. The first network element device, the second network element device, and the another network element device are located in a same autonomous system (autonomous system, AS) domain or a security domain. The full mesh means that any two network element devices in a second network element device and another network element device in the AS domain or the security domain need to establish a BGP connection. The BGP connection is also referred to as an internal BGP (internal BGP, IBGP) connection.

In this embodiment of this application, the BGP connection is used in the RA process. Therefore, the BGP connection not only may be used to perform route reflection, but also may be used to implement the RA process. It can be learned that, unlike the conventional technology in which an independent device is deployed as the RA server, in this embodiment of this application, the first network element device having the route reflection function serves as the RA server, to reduce costs of the RA process. Unlike the conventional technology in which a dedicated connection between the RA client and the RA server is manually established, in this embodiment of this application, a RA process can be implemented by directly using an established BGP connection, to improve RA efficiency.

For example, the first network element device 11 includes a route reflector. For example, the second network element device 12 includes a routing information exchange device, for example, a router or a layer 3 switch having a routing and forwarding function. Types of the first network element device 11 and the second network element device 12 are not limited in this embodiment of this application.

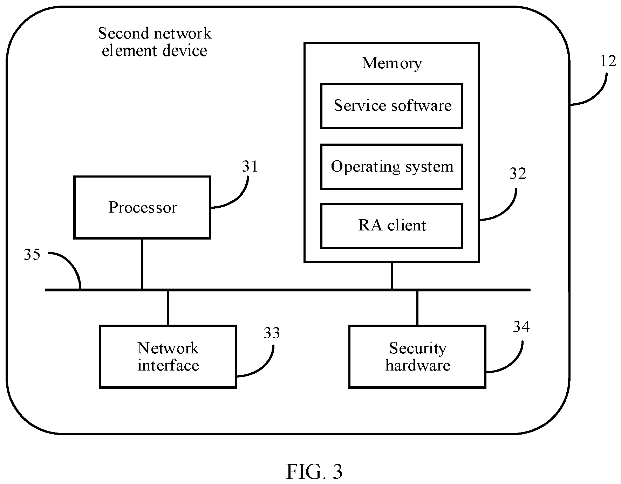

It can be understood that the second network element device 12 is a device that can support the RA process. For example, the second network element device 12 is built with security hardware (also referred to as a dedicated microcontroller), to implement the RA process based on the security hardware. FIG. 3 shows an example structure of a second network element device 12 built with security hardware. In FIG. 3, the second network element device 12 includes a processor 31, a memory 32, a network interface 33, security hardware 34, and a bus 35. The processor 31, the memory 32, the network interface 33, and the security hardware 34 are separately connected to the bus 35. An operating system, service software, and a RA client are stored in the memory 32 in a form of a program instruction. The processor 31 reads the program instruction from the memory 32, so that the operating system can run, and the service software and the RA client can run in the operating system. The security hardware 34 obtains and stores measurement information of the second network element device 12 from the processor 31 through the bus 35. The measurement information of the second network element device 12 includes information generated by a component of the second network element device 12 in a running process of service software. In the RA process, the RA client reads the measurement information of the second network element device 12 from the security hardware 34 through the bus 35, and sends the measurement information of the second network element device 12 to the network interface 33 through the bus 35. The network interface 33 sends, through a BGP connection, the measurement information of the second network element device 12 to the first network element device serving as the RA server, and the first network element device serving as the RA server compares the measurement information of the second network element device 12 and the remote attestation baseline file, to obtain a remote attestation result, so as to implement the RA process.

For example, the running process of the service software includes a boot process. In other words, the measurement information of the second network element device 12 includes information generated by the component of the second network element device 12 in the boot process of the service software. A process of storing information generated in the boot process of the service software is referred to as a trusted boot (trusted boot, TB) process. It can be understood that, in this implementation, in addition to implementing the RA process, the second network element device 12 can further support the TB process.

In some implementations, the security hardware includes a security chip, the security chip is, for example, a trusted platform module (trusted platform module, TPM) chip, and the TPM chip is security hardware that meets a TPM requirement. A TPM is an international standard for a secure cryptoprocessor (secure cryptoprocessor). The TPM requirement includes but is not limited to: using security hardware to perform a key-related function. The key-related function includes the RA. In addition, the key-related function may further include key generation, random number generation, key storage, and the like. This is not limited herein. For example, the TPM chip includes a platform configuration register (platform configuration register, PCR). The TPM chip stores the measurement information of the second network element device 12 in the PCR, and the measurement information that is of the second network element device 12 and that is stored in the PCR is also referred to as a PCR value.

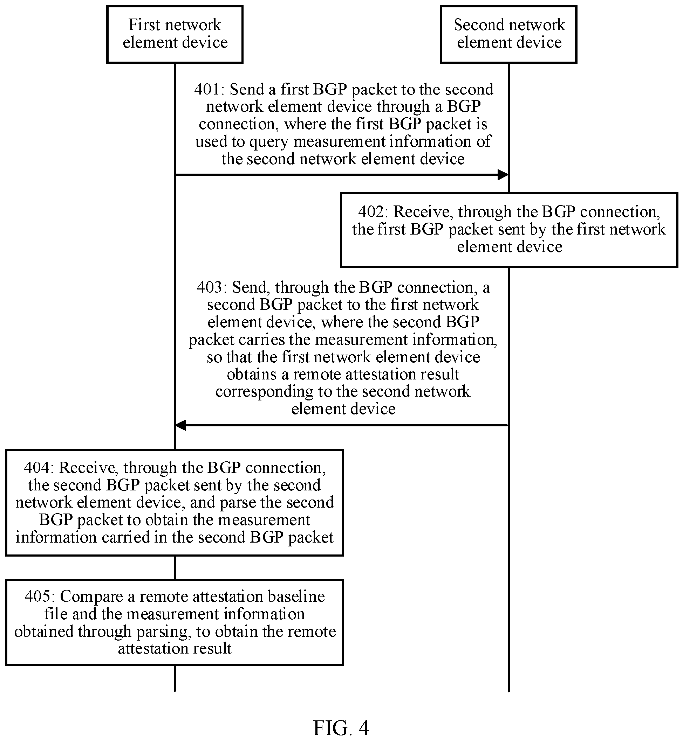

Based on the structures shown in FIG. 1 to FIG. 3, an embodiment of this application provides a remote attestation method. The method is applied to an interaction process between a first network element device and a second network element device. As shown in FIG. 4, the method includes steps 401 to 405.

401: The first network element device sends a first BGP packet to the second network element device through a BGP connection, where the first BGP packet is used to query measurement information of the second network element device.

The first network element device is a device having a route reflection function (for example, the first network element device 11 in FIG. 1 or FIG. 2). A BGP connection for route reflection is established between the first network element device and the second network element device, and the BGP connection is also referred to as a BGP session (session). For example, the first network element device and the second network element device establish a transmission control protocol (transmission control protocol, TCP) connection, and then establish the BGP connection based on the TCP connection. In some implementations, the first network element device stores a BGP session list, the BGP session list includes at least one network element device, and any network element device in the at least one network element device establishes a BGP connection to the first network element device. Therefore, any network element device in the BGP session list may serve as the second network element device. For example, the first network element device traverses the BGP session list, and selects the second network element device from the BGP session list. In this way, the first network element device can automatically discover a second network element device on which remote attestation needs to be performed.

In an example embodiment, the measurement information of the second network element device includes information generated by a component of the second network element device in a running process of service software. The service software is software installed on the second network element device. For example, the running process includes a boot process. In this case, the measurement information of the second network element device includes the information generated by the component of the second network element device in the boot process of the service software. In some implementations, the component of the second network element device includes but is not limited to each board in the second network element device, and the second network element device may have one or more components. In addition to the foregoing manner of determining the measurement information of the second network element device, the measurement information of the second network element device may be determined in another manner. A manner of determining the measurement information is not limited in this embodiment of this application, provided that the measurement information is determined based on an actual requirement.

In an example embodiment, the first BGP packet includes a first type-length-value (type-length-value, TLV) field, and the first TLV field indicates to query the measurement information. A process of querying the measurement information is also referred to as a challenge process, and the first BGP packet is also referred to as a challenge packet. For example, the first TLV field includes a first type field, a first length field, and a first value field, the first type field carries a first type (type) value, the first type value indicates to query the measurement information or carry the measurement information, the first length field indicates a length of the first value field, and the first value field indicates that the first type value indicates to query the measurement information. In some implementations, a manner in which the first value field indicates that the first type value indicates to query the measurement information is as follows: The first value field carries a first reference value, or the first value field is set to be empty. When the first value field carries the first reference value, the first reference value includes a value that is different from the measurement information and that is not confused with the measurement information. The first reference value may be configured, or may be obtained through negotiation between the first network element device and the second network element device. The first reference value is not limited in this embodiment of this application. When the first value field is set to be empty, because the first length field indicates the length of the first value field, the first length field is set to zero.

Because the first BGP packet is a type of BGP packet, the following describes a packet structure of the BGP packet, to understand a packet structure of the first BGP packet and a packet structure of another BGP packet in the following.

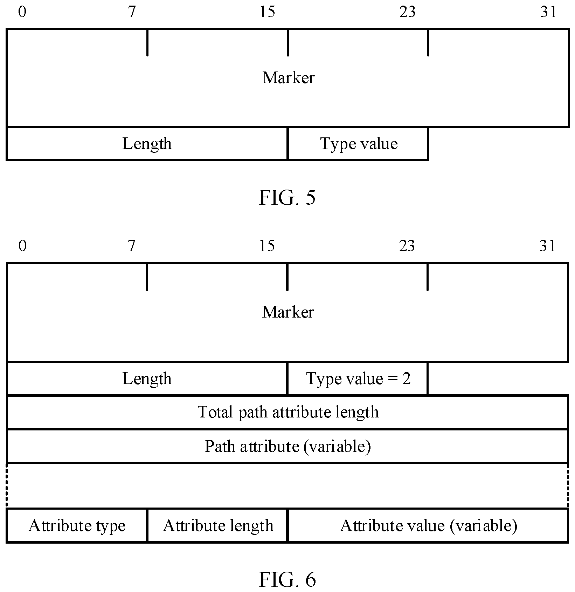

The BGP packet includes a BGP packet header and packet content. FIG. 5 shows a structure of a BGP packet header. The BGP packet header includes a marker (marker) field, a length (length) field, and a type value field. The marker field is used to perform BGP authentication. The length field indicates a total length of the BGP packet, that is, a sum of a length of the BGP packet header and a length of the packet content. The type value field is used to distinguish between different packet types. For example, if a value of the type value field is 1, the packet type is an open (open) type. If a value of the type value field is 2, the packet type is an update (update) type. In addition, different packet types correspond to different packet content.

FIG. 6 shows a packet structure of an update-type BGP packet. The update-type BGP packet includes a BGP packet header and packet content corresponding to the update type. The packet content corresponding to the update type includes a total path attribute length (total path attribute length) field and a path attribute (path attribute) field, the total path attribute length field indicates a length of the path attribute field, and the length of the path attribute field is variable (variable). In some implementations, the path attribute field is in a TLV format, the path attribute field includes an attribute type (attribute type) field, an attribute length (attribute length) field, and an attribute value (attribute value) field, and a length of the attribute value field is variable.

In an example embodiment, the first BGP packet is a first update packet, and the first update packet is a BGP packet whose packet type is the update type. The first update packet includes a first path attribute field, and the first TLV field is located in the first path attribute field. The first path attribute field is the path attribute field shown in FIG. 6, the first type field included in the first TLV field is the attribute type field shown in FIG. 6, the first length field included in the first TLV field is the attribute length field shown in FIG. 6, and the first value field included in the first TLV field is the attribute value field shown in FIG. 6. In this case, the first type value carried in the first type field included in the first TLV field is any type value in an unassigned (unassigned) type value corresponding to the path attribute field. The unassigned type value corresponding to the path attribute field includes but is not limited to 39, 41 to 127, 130 to 240, and 244 to 254. In this embodiment of this application, the first type value is, for example, 201.

It should be noted that, a TCG proposes concepts of "chain of trust" and "trusted measurement" for trusted computing. First, a trusted root is set, and the trusted root performs trusted measurement on another device. If the trusted root verifies that a device is in a trusted state, the device in the trusted state and the trusted root form a chain of trust. In this embodiment of this application, the first network element device verifies whether the second network element device is in a trusted state. In other words, the first network element device performs trusted measurement on the second network element device. Therefore, before 401 is performed, the first network element device needs to be set as a trusted root. In response to that the first network element device verifies, in a subsequent process, that the second network element device is in the trusted state, the first network element device and the second network element device form a chain of trust. In addition, before step 401, the first network element device further needs to be set as a RA server in this embodiment of this application. For example, the first network element device receives a command line configured by a user, or receives a configuration command sent by a network management device, to configure the first network element device as a RA server. In some implementations, the command line is, for example, a RA server enable (RA server enable) command line. In some other implementations, the first network element device receives, based on a simple network management protocol (simple network management protocol, SNMP) or a network configuration (network configuration, NETCONF) protocol, the configuration command sent by the network management device.

402: The second network element device receives, through the BGP connection, the first BGP packet sent by the first network element device.

After the first network element device sends the first BGP packet to the second network element device through the BGP connection, the second network element device can receive the first BGP packet. The second network element device parses the first BGP packet, to determine that the first BGP packet is used to query the measurement information of the second network element device.

403: The second network element device sends, through the BGP connection, a second BGP packet to the first network element device, where the second BGP packet carries the measurement information, so that the first network element device obtains a remote attestation result corresponding to the second network element device.

After determining that the first BGP packet is used to query the measurement information of the second network element device, the second network element device obtains the measurement information, and sends, to the first network element device, the second BGP packet that carries the measurement information. For example, the second network element device obtains the measurement information from security hardware (for example, a TPM chip including a PCR) built in the second network element device.

In an example embodiment, the second BGP packet includes a second TLV field, and the second TLV field is used to carry the measurement information. Carrying the measurement information is to return the measurement information to the first network element device, and a process of returning the measurement information is also referred to as a response process. Therefore, the second BGP packet is also referred to as a response packet. For example, the second TLV field includes a second type field, a second length field, and a second value field, the second type field carries the first type value, and the first type value indicates to query the measurement information or carry the measurement information. For the first type value, refer to the descriptions in step 401. Details are not described herein again. The second length field indicates a length of the second value field, and the second value field is used to carry the measurement information, to indicate that the first type value indicates to carry the measurement information.

It can be learned from the descriptions in step 401 that, the measurement information of the second network element device includes the information generated by the component of the second network element device in the running process (for example, the boot process) of the service software. In some implementations, the measurement information carried in the second value field includes a hash value obtained by performing hash (hash) calculation on the measurement information of the second network element device. In some implementations, the measurement information carried in the second value field includes measurement information encoded based on a yet another next generation (yet another next generation, YANG) model. The YANG model is, for example, a YANG model defined in draft-ietf-rats-yang-tpm-charra-11.

In an example embodiment, the second BGP packet is a second update packet, and the second update packet is a BGP packet whose packet type is the update type. The second update packet includes a second path attribute field, and the second TLV field is located in the second path attribute field. The second path attribute field is the path attribute field shown in FIG. 6, the second type field included in the second TLV field is the attribute type field shown in FIG. 6, the second length field included in the second TLV field is the attribute length field shown in FIG. 6, and the second value field included in the second TLV field is the attribute value field shown in FIG. 6.

404: The first network element device receives, through the BGP connection, the second BGP packet sent by the second network element device, and parses the second BGP packet to obtain the measurement information carried in the second BGP packet.

Because the second network element device sends the second BGP packet to the first network element device, the first network element device can receive the second BGP packet. The first network element device parses the second BGP packet, to obtain the measurement information of the second network element device.

405: The first network element device compares a remote attestation baseline file and the measurement information obtained through parsing, to obtain a remote attestation result.

The measurement information obtained through parsing is the measurement information that is of the second network element device and that is carried in the second BGP packet. The remote attestation baseline file includes a reference value of the measurement information. The remote attestation baseline file is used as a reference of the measurement information, that is, a basis for comparison in the RA process. For example, when the measurement information includes the information generated by the component of the second network element device in the running process of the service software, the remote attestation baseline file includes information generated by the component in a running process of authentic and complete service software that is not tampered with. When the second network element device includes a plurality of components, the remote attestation baseline file also includes the information generated by the component in the running process of authentic and complete service software that is not tampered with. In this case, the remote attestation baseline file may be represented as a list. For example, the authentic and complete service software that is not tampered with includes service software existing during distribution.

The first network element device compares the remote attestation baseline file and the measurement information obtained through parsing, to obtain a remote attestation result indicating whether the second network element device is in the trusted state. In response to that the measurement information is consistent with the remote attestation baseline file, the first network element device obtains a remote attestation result indicating that the second network element device is in the trusted state. In response to that the measurement information is inconsistent with the remote attestation baseline file, the first network element device obtains a remote attestation result indicating that the second network element device is in an untrusted state.

In an example embodiment, that the measurement information is consistent with the remote attestation baseline file includes: Each piece of information in the measurement information is consistent with corresponding information in the remote attestation baseline file. Corresponding information is information generated by a same component. For example, the component in the second network element device includes a board 1 and a board 2. The measurement information includes information generated by the board 1 and information generated by the board 2 in the running process of the service software, and the remote attestation baseline file includes information generated by the board 1 and information generated by the board 2 in the running process of the authentic and complete service software that is not tampered with. In response to that the information generated by the board 1 in the measurement information is the same as the information generated by the board 1 in the remote attestation baseline file, and the information generated by the board 2 in the measurement information is the same as the information generated by the board 2 in the remote attestation baseline file, the first network element device obtains the remote attestation result indicating that the second network element device is in the trusted state.

For example, after the first network element device obtains the remote attestation result, the first network element device sends the remote attestation result to the network management device, to present the remote attestation result to a user of the network management device, and the user of the network management device manages the second network element device based on the remote attestation result. For example, when the remote attestation result indicates that the second network element device is in the untrusted state, the user of the network management device sends an alarm to the user of the second network element device, or the user of the network management device disconnects the second network element device.

It can be understood that, before step 405 is performed, the first network element device needs to obtain the remote attestation baseline file. In some implementations, the remote attestation baseline file is received by the first network element device. The first network element device receives a remote attestation baseline file sent by another device. The another device is, for example, the network management device. The user of the network management device uploads the remote attestation baseline file to the first network element device by using the network management device. In some implementations, the first network element device receives the remote attestation baseline file in an environment whose security is ensured. For example, the first network element device receives the remote attestation baseline file based on a secure file transfer protocol (secure file transfer protocol, SFTP). In some other implementations, the remote attestation baseline file is generated by the first network element device based on measurement information of the first network element device. For example, in response to that the first network element device and the second network element device are devices of a same version that are provided by a same vendor, the first network element device generates the remote attestation baseline file based on the measurement information of the first network element device. A reason why the first network element device can independently generate the remote attestation baseline file is that the first network element device is a trusted root. Therefore, the service software in the first network element device is not tampered with, authentic, and complete. Based on this, because the first network element device and the second network element device are devices of a same version that are provided by a same vendor, the first network element device and the second network element device include a same component. Therefore, the first network element device may record information generated by each component in the running process of the service software, to obtain the measurement information of the first network element device. In this case, the measurement information of the first network element device is used as the remote attestation baseline file.

In addition, in a process of using the second network element device, steps 401 to 405 may be performed periodically, to periodically verify whether the second network element device is in the trusted state, and ensure security of the second network element device.

In an example embodiment, that the first network element device sends a first BGP packet to the second network element device through a BGP connection in step 401 includes: The first network element device establishes a secure connection to the second network element device through the BGP connection, and sends the first BGP packet to the second network element device through the secure connection. The first BGP packet is transmitted through the secure connection, to improve security of the first BGP packet in a transmission process, and improve accuracy of a subsequently obtained remote attestation result. In an example embodiment, that the second network element device receives, through the BGP connection, the first BGP packet sent by the first network element device in step 402 includes: The second network element device establishes the secure connection to the first network element device through the BGP connection, and receives, through the secure connection, the first BGP packet sent by the first network element device. That the second network element device sends, through the BGP connection, a second BGP packet to the first network element device in step 403 includes: The second network element device sends the second BGP packet to the first network element device through the secure connection. That the first network element device receives, through the BGP connection, the second BGP packet sent by the second network element device in step 404 includes: The first network element device receives, through the secure connection, the second BGP packet sent by the second network element device.

In an example embodiment, the secure connection includes a transport layer security (transport layer security, TLS) connection or an internet protocol (internet protocol, IP) Security (security, Sec) tunnel. When the secure connection is a TLS connection, that the first network element device establishes a secure connection to the second network element device through the BGP connection includes: The first network element device establishes a new TCP connection to the second network element device through the BGP connection, establishes a TLS connection based on the new TCP connection, and establishes a new BGP connection based on the TLS connection. The new BGP connection is also referred to as a BGP over TLS (BGP over TLS) connection. When the secure connection is an IP Sec tunnel, the first network element device does not need to establish a new BGP connection, but directly establishes the IP Sec tunnel through the BGP connection. The secure connection is not limited in this embodiment of this application, provided that the secure connection is selected based on an actual requirement.

In an example embodiment, that the first network element device establishes a secure connection to the second network element device through the BGP connection includes: In response to determining that the second network element device supports a remote attestation function, the first network element device sends a secure connection establishment request to the second network element device through the BGP connection, and establishes the secure connection to the second network element device based on the secure connection establishment request. For the second network element device, that the second network element device establishes the secure connection to the first network element device through the BGP connection includes: The second network element device receives, through the BGP connection, the secure connection establishment request sent by the first network element device, and establishes the secure connection to the first network element device based on the secure connection establishment request. In this embodiment of this application, when it is determined that the second network element device supports the remote attestation function, the first network element device establishes the secure connection to the second network element device, to exchange the first BGP packet and the second BGP packet through the secure connection, to implement the RA process. Therefore, a case in which the secure connection is established but the second network element device does not support the remote attestation function can be avoided, and a waste of a transmission bandwidth and processing resources is provided.

In an example embodiment, that the second network element device supports the remote attestation function includes: version information corresponding to the second network element device matches version information corresponding to the remote attestation baseline file, and/or the second network element device has an address family extension capability. Therefore, there are the following three cases in which the second network element device supports the remote attestation function.

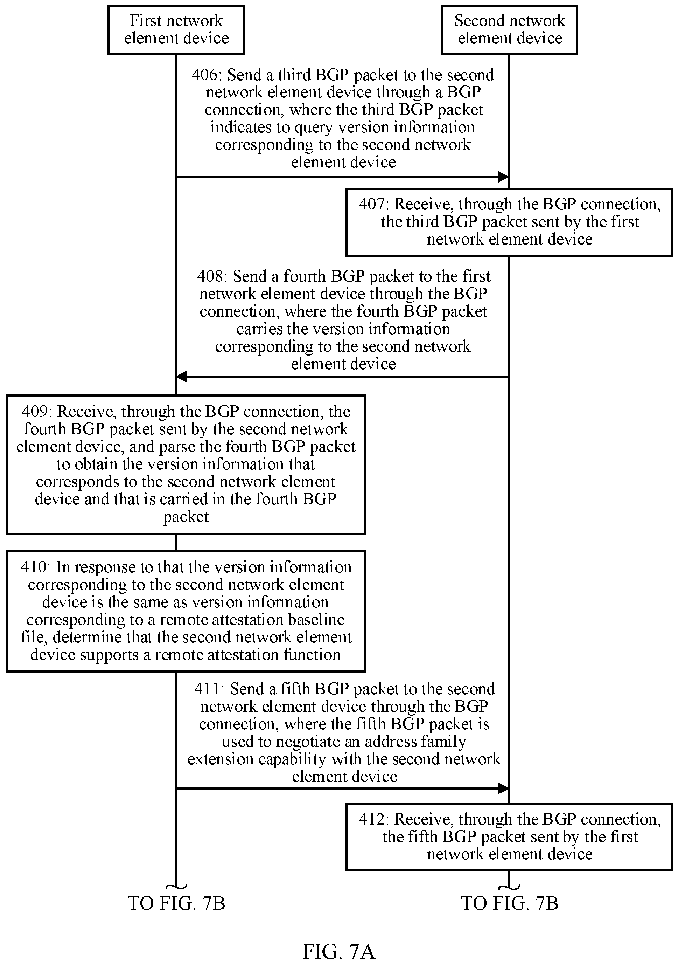

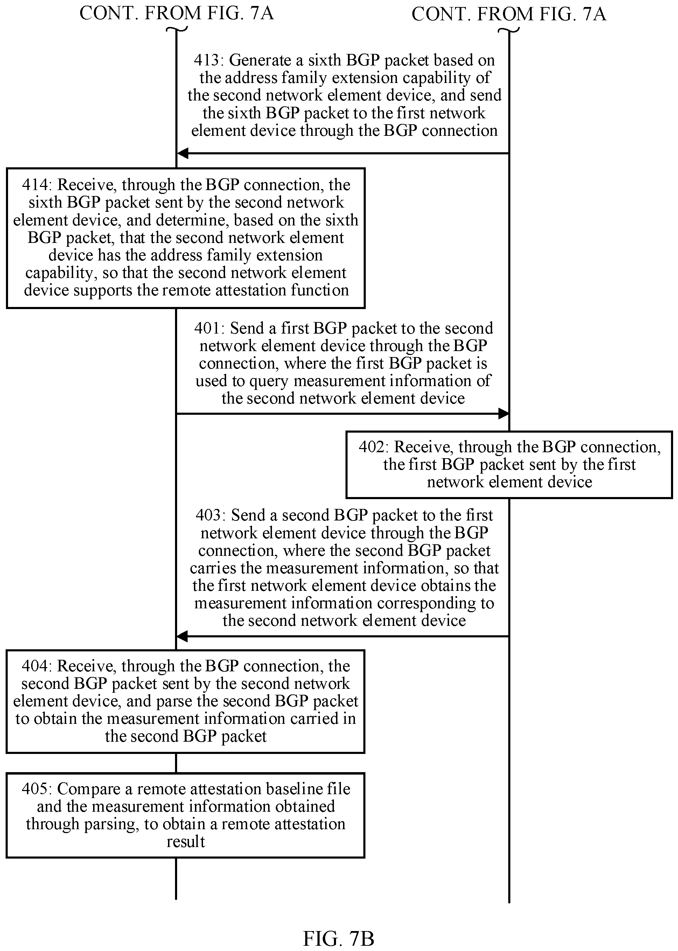

In a first case, that the second network element device supports the remote attestation function means that the version information corresponding to the second network element device matches the version information corresponding to the remote attestation baseline file, and the second network element device has the address family extension capability. For the first case, before the first network element device sends the first BGP packet to the second network element device through the BGP connection, or before the second network element device receives, through the BGP connection, the first BGP packet sent by the first network element device, as shown in FIG. 7A and FIG. 7B, the method further includes steps 406 to 414.

406: The first network element device sends a third BGP packet to the second network element device through the BGP connection, where the third BGP packet indicates to query the version information corresponding to the second network element device.

An objective of querying, by the first network element device, the version information corresponding to the second network element device is as follows: The first network element device needs to determine whether the version information corresponding to the remote attestation baseline file is the same as the version information corresponding to the second network element device. Only when the version information corresponding to the remote attestation baseline file is the same as the version information corresponding to the second network element device, the first network element device can use the remote attestation baseline file to perform remote attestation on the second network element device.

In an example embodiment, the third BGP packet includes a third TLV field, and the third TLV field indicates to query the version information. For example, the third TLV field includes a third type field, a third length field, and a third value field, the third type field carries a second type value, the second type value indicates to query the version information or carry the version information, the third length field indicates a length of the third value field, and the third value field indicates that the second type value indicates to query the version information. For example, the third value field carries a second reference value, or the third value field is set to be empty, to indicate that the second type value indicates to query the version information. The second reference value includes a value that is different from the version information and that is not confused with the version information. The second reference value is configured or obtained through negotiation. The second reference value is not limited in this embodiment of this application. In addition, when the third value field is set to be empty, the third length field is set to 0.

In an example embodiment, the third BGP packet is a third update packet, and the third update packet is a BGP packet whose packet type is the update type. The third update packet includes a third path attribute field, and the third TLV field is located in the third path attribute field. The third path attribute field is the path attribute field shown in FIG. 6, the third type field included in the third TLV field is the attribute type field shown in FIG. 6, the third length field included in the third TLV field is the attribute length field shown in FIG. 6, and the third value field included in the third TLV field is the attribute value field shown in FIG. 6. In this case, the second type value carried in the third type field included in the third TLV field is any type value in an unassigned type value corresponding to the path attribute field, and the second type value is different from the first type value in the first BGP packet and the second BGP packet. For example, in this embodiment of this application, the second type value is 200.

407: The second network element device receives, through the BGP connection, the third BGP packet sent by the first network element device.

After the first network element device sends the third BGP packet through the BGP connection, the second network element device also receives the third BGP packet through the BGP connection. The second network element device parses the third BGP packet, to determine that the third BGP packet indicates to query version information corresponding to the second network element device.

408: The second network element device sends a fourth BGP packet to the first network element device through the BGP connection, where the fourth BGP packet carries the version information corresponding to the second network element device.

After determining that the third BGP packet is used to query the version information corresponding to the second network element, the second network element device obtains the version information corresponding to the second network element device, and sends, to the first network element device, the third BGP packet carrying the version information corresponding to the second network element device.

In an example embodiment, the fourth BGP packet includes a fourth TLV field, and the fourth TLV field is used to carry the version information corresponding to the second network element device. For example, the version information corresponding to the second network element device includes subversion information of at least one component in the second network element device, and subversion information of any component in the at least one component includes at least one type of information in a software version or a hardware version. The fourth TLV field is used to carry an information list, the information list includes at least one information item, and any information item in the at least one information item includes a component name of any component and subversion information of the any component. For example, if the component of the second network element device includes a board 1 to a board N (N is not less than 2 and N is a positive integer), the information list carried in the fourth TLV field includes N information items, and the N information items are in a one-to-one correspondence with the N boards. A first information item includes the board 1, a hardware version of the board 1, and a software version of the board 1, and a second information item includes the board 2, a hardware version of the board 2, and a software version of the board 2. By analogy, an N^{th} information item includes a board N, a hardware version of the board N, and a software version of the board N.

For example, the fourth TLV field includes a fourth type field, a fourth length field, and a fourth value field, the fourth type field carries the second type value, and the second type value indicates to query the version information or carry the version information. For the second type value, refer to the descriptions in step 406. Details are not described herein again. The fourth length field indicates a length of the fourth value field, and the fourth value field is used to carry the version information corresponding to the second network element device, to indicate that the second type value indicates to carry the version information. When the fourth TLV field carries the information list, the information list is carried in the fourth value field included in the fourth TLV field.

In an example embodiment, the fourth BGP packet is a fourth update packet, and the fourth update packet is a BGP packet whose packet type is an update type. The fourth update packet includes a fourth path attribute field, and the fourth TLV field is located in the fourth path attribute field. The fourth path attribute field is the path attribute field shown in FIG. 6, the fourth type field included in the fourth TLV field is the attribute type field shown in FIG. 6, the fourth length field included in the fourth TLV field is the attribute length field shown in FIG. 6, and the fourth value field included in the fourth TLV field is the attribute value field shown in FIG. 6.

409: The first network element device receives, through the BGP connection, a fourth BGP packet sent by the second network element device, and parses the fourth BGP packet to obtain the version information that corresponds to the second network element device and that is carried in the fourth BGP packet.

Because the second network element device sends the fourth BGP packet to the first network element device, the first network element device can receive the fourth BGP packet. The first network element device parses the fourth BGP packet, to obtain the version information corresponding to the second network element device.

410: In response to that the version information corresponding to the second network element device is the same as the version information corresponding to the remote attestation baseline file, the first network element device determines that the second network element device supports the remote attestation function.

For example, in response to that the version information corresponding to the second network element device is the same as the version information corresponding to the remote attestation baseline file, it may be determined that the version information corresponding to the second network element device matches the version information corresponding to the remote attestation baseline file, to determine that the second network element device supports the remote attestation function. For example, on the basis of determining that the version information corresponding to the second network element device matches the version information corresponding to the remote attestation baseline file, it further needs to be determined that the second network element device has the address family extension capability, to determine that the second network element device supports the remote attestation function. For a manner of determining that the second network element device has the address family extension capability, refer to the descriptions in steps 411 to 414. Details are not described herein again.

In an example embodiment, that the version information corresponding to the second network element device is the same as the version information corresponding to the remote attestation baseline file includes: Each piece of information in the measurement information is consistent with corresponding information in the remote attestation baseline file. Corresponding information is information generated by a same component. For example, the component in the second network element device includes a board 1 and a board 2, and the version information includes a software version and a hardware version. In response to that a hardware version of the board 1 in the measurement information is the same as a hardware version of the board 1 in the remote attestation baseline file, a software version of the board 1 in the measurement information is the same as a software version of the board 1 in the remote attestation baseline file, a hardware version of the board 2 in the measurement information is the same as a hardware version of the board 2 in the remote attestation baseline file, and a software version of the board 2 in the measurement information is the same as a software version of the board 2 in the remote attestation baseline file, the first network element device can determine that the version information corresponding to the second network element device is the same as the version information corresponding to the remote attestation baseline file.

411: The first network element device sends a fifth BGP packet to the second network element device through the BGP connection, where the fifth BGP packet is used to negotiate the address family extension capability with the second network element device.

The first network element device negotiates the address family extension capability with the second network element device. In other words, the first network element device determines whether the second network element device is capable of supporting an extended address family. An address family is extended, to obtain the extended address family. The address family is extended to distinguish between service, so that the RA process is implemented based on the extended address family, and another service is implemented based on the another address family. It should be noted that a command line configured by the user includes a global command line and a command line in the address family. The global command line is valid for all address families, and the command line in the address family is valid only for some specified address families. Step 401 describes a process of receiving, by the first network element device, the command line configured by the user. The command line is used to use the first network element device as the RA server. For example, when the address family is extended, the command line includes the command line in the address family.

In an example embodiment, the fifth BGP packet includes at least one first capability subfield, any one of the at least one first capability subfield carries an address family identifier, and the address family identifier indicates an extended address family. The first network element device notifies the second network element device of the extended address family by using the fifth BGP packet, so that the second network element device determines whether the second network element device is capable of supporting the extended address family, to implement negotiation of the address family extension capability.

It can be understood that the first capability subfield in the fifth BGP packet is in a one-to-one correspondence with the extended address family. A larger quantity of first capability subfields included in the fifth BGP packet indicates a larger quantity of extended address families negotiated based on a fifth BGP packet. A quantity of first capability subfields is not limited in this embodiment of this application. For example, the fifth BGP packet includes two first capability subfields. One first capability subfield carries an internet protocol version 4 (internet protocol version 4, IPv4) address family identifier, and the IPv4 address family identifier indicates an extended IPv4 address family af-ipv4-RA. The other first capability subfield carries an internet protocol version 6 (internet protocol version 6, IPv6) address family identifier, and the IPv6 address family identifier indicates an extended IPv6 address family af-ipv6-RA. That is, the fifth BGP packet is used to negotiate the extended IPv4 address family and the extended IPv6 address family. The IPv4 address family af-ipv4-RA and the IPv6 address family af-ipv6-RA are used to implement the RA process. af-ipv4-RA is a name of the IPv4 address family, and af-ipv6-RA is a name of the IPv6 address family. The two names are merely examples. The name of the IPv4 address family and the name of the IPv6 address family are not limited in this embodiment of this application.

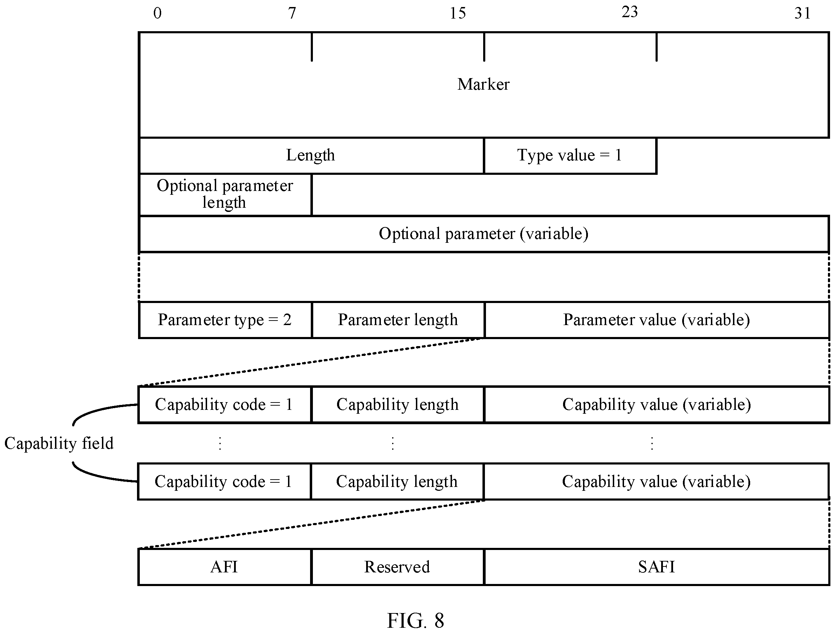

In an example embodiment, the fifth BGP packet is a first open packet. The first open packet is a BGP packet whose packet type is an open type. As shown in FIG. 8, a packet structure of an open-type BGP packet is described. The open-type BGP packet includes a BGP packet header and packet content corresponding to the open type. It can be learned from the descriptions in step 401 that, that a value of a type value field included in the BGP packet header is 1 indicates that a packet type is the open type. The packet content corresponding to the open type includes an optional parameter length (optional parameter length) field and an optional parameter (optional parameter) field. The optional parameter length field indicates a length of the optional parameter field. The optional parameter field includes a parameter type (parameter type) field, a parameter length (parameter length) field, and a parameter value (parameter value) field. That a value of the parameter type field is 2 indicates to perform capability negotiation. The parameter length field indicates a length of the parameter value field. The parameter value field includes at least one capability (capability) field. One capability field includes a capability code (capability code) field, a capability length (capability length) field, and a capability value (capability value) field. That a value of the capability code field is 1 indicates to negotiate the address family capability, the capability length field indicates a length of the capability value field, the capability value field includes an address family identifier (address family identifier, AFI) field, a reserved (reserved) field, and a sub-address family identifier (sub-address family identifier, SAFI) field, the AFI field indicates an address family that needs to be negotiated, the reserved field is set to 0, the SAFI field is used to distinguish between different indicated communication modes, and the communication modes include but are not limited to unicast, multicast, and a virtual private network (virtual private network, VPN).

In an example embodiment, the first open packet includes a first optional parameter field, and the at least one first capability subfield is located in the first optional parameter field. The first optional parameter field is the optional parameter field shown in FIG. 8, the first capability subfield is the capability field shown in FIG. 8, and the address family identifier that needs to be carried in the first capability subfield is the AFI field shown in FIG. 8. In the conventional technology, when a value of the AFI field is 1, 2, and 196, the IPv4 address family, the IPv6 address family, and a layer 2 (layer 2, L2) are respectively indicated. Therefore, in this embodiment of this application, a value other than 1, 2, and 196 is used as the address family identifier, to indicate the extended address family. For example, that the value of the AFI field is 256 indicates the extended IPv4 address family, and that the value of the AFI field is 257 indicates the extended IPv6 address family. In addition, the communication mode indicated by the SAFI field is not limited in this embodiment of this application.

412: The second network element device receives, through the BGP connection, the fifth BGP packet sent by the first network element device.

The second network element device receives and parses the fifth BGP packet, to determine that the fifth BGP packet is used to negotiate the address family extension capability with the first network element device. It can be learned from the descriptions in step 411 that the fifth BGP packet includes at least one first capability subfield that carries an address family identifier, and the second network element device can obtain the address family identifier by parsing the fifth BGP packet, to determine an extended address family indicated by the address family identifier.

413: The second network element device generates a sixth BGP packet based on the address family extension capability of the second network element device, and sends the sixth BGP packet to the first network element device through the BGP connection.

After determining the extended address family, the second network element device can determine, based on the address family extension capability of the second network element device, that the second network element device supports the extended address family. Therefore, the second network element device notifies, by using the sixth BGP packet, the first network element device that the second network element device is capable of supporting the extended address family.

In an example embodiment, that the second network element device generates a sixth BGP packet based on the address family extension capability of the second network element device includes: In response to determining that the second network element device has the address family extension capability, the second network element device sends, to the first network element device, the sixth BGP packet including the at least one second capability subfield that carries an address family identifier. That is, the sixth BGP packet includes at least one second capability subfield that carries an address family identifier.

That the second network element device has the address family extension capability includes: the second network element device can support an extended address family indicated by at least one address family identifier. In addition, when the second network element device can support an extended address family indicated by a specific address family identifier, the second capability subfield included in the sixth BGP packet sent by the second network element device to the first network element device includes the address family identifier. The second capability subfield is in a one-to-one correspondence with the address family identifier. For example, the fifth BGP packet includes two first capability subfields, and the two first capability subfields respectively carry the IPv4 address family identifier and the IPv6 address family identifier. In response to that the second network element device can support only an extended IPv4 address family indicated by the IPv4 address family identifier, the sixth BGP packet including a second capability subfield carrying the IPv4 address family identifier is sent to the first network element device. In response to that the second network element device can support the extended IPv4 address family indicated by the IPv4 address family identifier and can support the extended IPv6 address family indicated by the IPv6 address family identifier, the sixth BGP packet sent by the second network element device to the first network element device includes two second capability subfields, and the two second capability subfields respectively carry the IPv4 address family identifier and the IPv6 address family identifier.

In an example embodiment, a packet type of the sixth BGP packet is an open type, the sixth BGP packet includes a second optional parameter field, and in response to that the sixth BGP packet includes the at least one second capability subfield that carries an address family identifier, the at least one second capability subfield that carries an address family identifier is located in the second optional parameter field. The second optional parameter field is the optional parameter field shown in FIG. 8, the second capability subfield is the capability field shown in FIG. 8, and the address family identifier that needs to be carried in the second capability subfield is the AFI field shown in FIG. 8. For the AFI field, refer to the descriptions in step 411. Details are not described herein again.

414: The first network element device receives, through the BGP connection, the sixth BGP packet sent by the second network element device, and determines, based on the sixth BGP packet, that the second network element device has the address family extension capability, so that the second network element device supports the remote attestation function.

In response to determining, based on the sixth BGP packet, that the second network element device has the address family extension capability, it is determined that the second network element device supports the remote attestation function. For example, on the basis of determining that the second network element device has the address family extension capability, steps 406 to 410 further need to be performed to determine that the version information corresponding to the second network element device matches the version information corresponding to the remote attestation baseline file, to determine that the second network element device supports the remote attestation function.

In an example embodiment, that the first network element device determines, based on the sixth BGP packet, that the second network element device has the address family extension capability includes: The first network element device parses the sixth BGP packet. In response to that the sixth BGP packet includes the at least one second capability subfield that carries an address family identifier, the first network element device determines that the second network element device has the address family extension capability. When the sixth BGP packet includes the second capability subfield that carries the address family identifier, it indicates that the second network element device can support the extended address family indicated by the address family identifier, to determine that the second network element device has the address family extension capability.

It can be understood that an execution sequence of steps 406 to 410 and steps 411 to 414 is not limited in this embodiment of this application. For example, steps 406 to 410 are performed before steps 411 to 414. Alternatively, steps 406 to 410 are performed after steps 411 to 414. Alternatively, steps 406 to 410 and steps 411 to 414 are simultaneously performed. In conclusion, after steps 406 to 410 and steps 411 to 414 are all performed, it can be determined that the second network element device supports the remote attestation function, so that steps 401 to 405 can continue to be performed.

Step 410 is performed when the version information corresponding to the second network element device is the same as the version information corresponding to the remote attestation baseline file. It should be understood that, after steps 406 to 409 are performed, there may be a case in which the version information corresponding to the second network element device is different from the version information corresponding to the remote attestation baseline file, that is, a case in which the version information corresponding to the second network element device does not match the version information corresponding to the remote attestation baseline file. When the version information corresponding to the second network element device does not match the version information corresponding to the remote attestation baseline file, the first network element device determines that the second network element device does not support the remote attestation function and cannot perform remote attestation on the second network element device. Therefore, steps 401 to 405 do not need to be performed. In addition, in response to that steps 411 to 414 are performed later, the first network element device does not need to perform steps 411 to 414 when the version information corresponding to the second network element device does not match the version information corresponding to the remote attestation baseline file, to avoid a waste of processing resources.

Step 413 and step 414 are performed when the second network element device has the address family extension capability. It should be understood that, after step 411 and step 412 are performed, there may be a case in which the second network element device does not have the address family extension capability. When the second network element device does not have the address family extension capability, unlike step 413 in which the second network element device sends, to the first network element device, the sixth BGP packet including the at least one second capability subfield that carries the address family identifier, the second network element device sends, to the first network element device, the sixth BGP packet that does not include the second capability subfield that carries the address family identifier. When the packet type of the sixth BGP packet is the open type, the sixth BGP packet includes a second optional parameter field, and the second optional parameter field is empty. After the first network element device parses the sixth BGP packet, unlike step 414 in which the sixth BGP packet includes the at least one second capability subfield that carries the address family identifier, the sixth BGP packet does not include the second capability subfield that carries the address family identifier, so that the first network element device determines that the second network element device does not have the address family extension capability. When the second network element device does not have the address family extension capability, the first network element device determines that the second network element device does not support the remote attestation function and cannot perform remote attestation on the second network element device. Therefore, steps 401 to 405 do not need to be performed. In addition, in response to that steps 406 to 410 are performed later, the first network element device does not need to perform steps 406 to 410 when the second network element device does not have the address family extension capability, to avoid a waste of processing resources.

In a second case, that the second network element device supports the remote attestation function means that the version information corresponding to the second network element device matches the version information corresponding to the remote attestation baseline file. In this case, before the first network element device sends the first BGP packet to the second network element device through the BGP connection, or before the second network element device receives, through the BGP connection, the first BGP packet sent by the first network element device, only steps 406 to 410 need to be performed, and steps 411 to 414 do not need to be performed. After steps 406 to 410 are performed, steps 401 to 405 can continue to be performed. In addition, in response to determining, after steps 406 to 409 are performed, that the version information corresponding to the second network element device is different from the version information corresponding to the remote attestation baseline file, the first network element device determines that the second network element device does not support the remote attestation function and cannot perform remote attestation on the second network element device, and does not perform steps 401 to 405.

In a third case, that the second network element device supports the remote attestation function means that the second network element device has the address family extension capability. In this case, before the first network element device sends the first BGP packet to the second network element device through the BGP connection, or before the second network element device receives, through the BGP connection, the first BGP packet sent by the first network element device, only steps 411 to 414 need to be performed, and steps 406 to 410 do not need to be performed. After steps 411 to 414 are performed, steps 401 to 405 can continue to be performed. In addition, in response to determining, after step 411 and step 412 are performed, that the second network element device does not have the address family extension capability, the first network element device determines that the second network element device does not support the remote attestation function and cannot perform remote attestation on the second network element device. Therefore, steps 401 to 405 do not need to be performed. When the second network element device does not have the address family extension capability, for the sixth BGP packet, refer to the descriptions in the first case. Details are not described herein again.

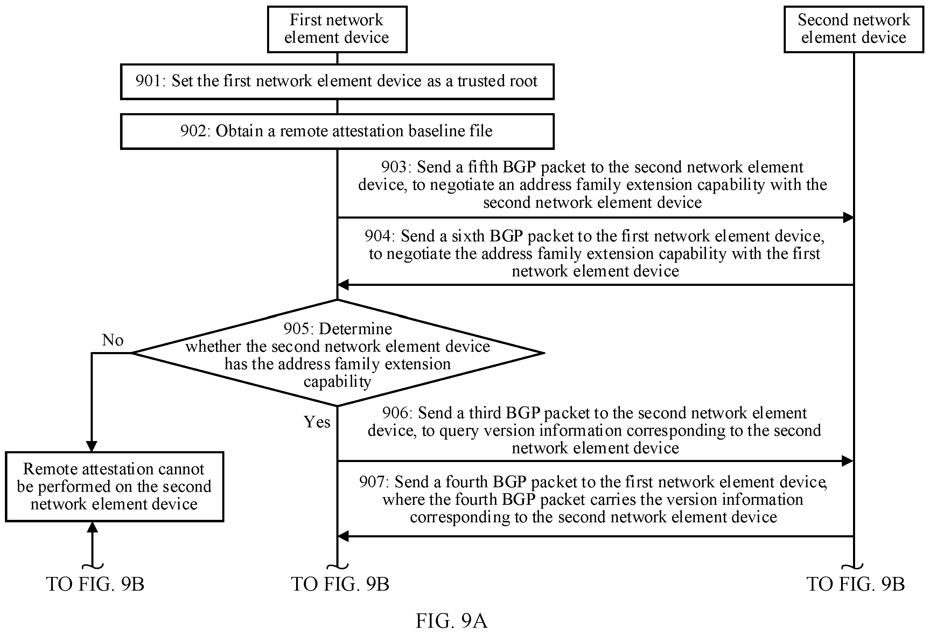

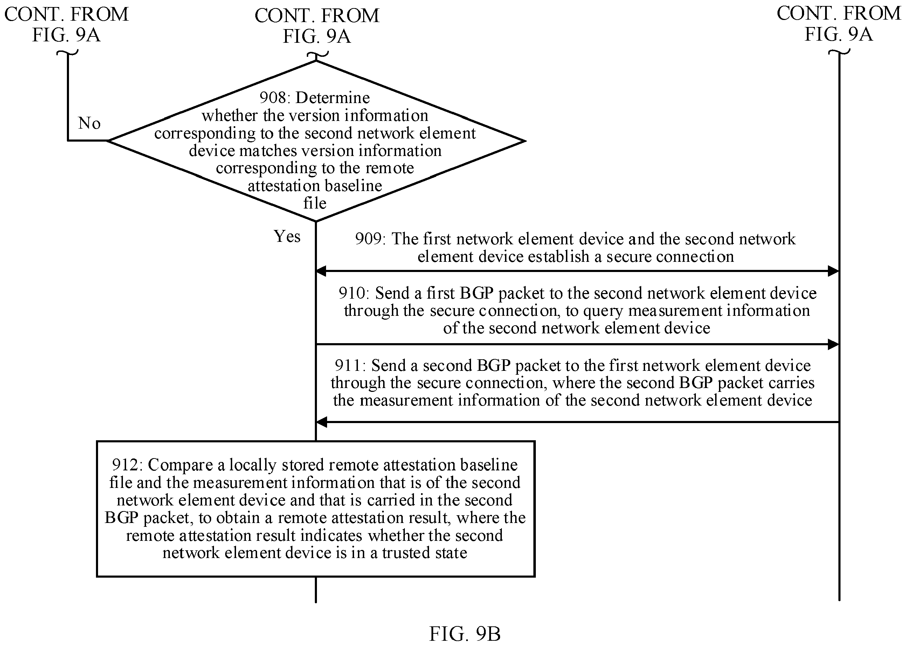

FIG. 9A and FIG. 9B are a schematic flowchart of a remote attestation method according to an embodiment of this application. ARA process is generally described with reference to FIG. 9A and FIG. 9B. As shown in FIG. 9A and FIG. 9B, the RA process includes steps 901 to 912.

901: Set a first network element device as a trusted root.

The first network element device has a route reflection function. The first network element device is set as a trusted root, so that the first network element device can perform trusted measurement on a second network element device, to implement the RA process. The second network element device is a device for which whether the device is in a trusted state needs to be determined, and a BGP connection for route reflection is established between the first network element device and the second network element device.

902: The first network element device obtains a remote attestation baseline file.

For example, the first network element device receives a remote attestation baseline file sent by another device. Alternatively, when the first network element device and the second network element device are devices of a same version that are provided by a same vendor, the first network element device independently generates the remote attestation baseline file based on measurement information of the first network element device.

903: The first network element device sends a fifth BGP packet to the second network element device, to negotiate an address family extension capability with the second network element device. For step 903, refer to the descriptions in step 411. Details are not described herein again.

904: The second network element device sends a sixth BGP packet to the first network element device, to negotiate the address family extension capability with the first network element device. For step 904, refer to the descriptions in step 413. Details are not described herein again.

905: The first network element device determines whether the second network element device has an address family extension capability. The first network element device checks the address family extension capability of the second network element device based on a parsing result of the sixth BGP packet. If the second network element device has the address family extension capability, step 906 continues to be performed. If the second network element device does not have the address family extension capability, the first network element device determines that remote attestation cannot be performed on the second network element device.

906: The first network element device sends a third BGP packet to the second network element device, to query version information corresponding to the second network element device. For step 906, refer to the descriptions in step 406. Details are not described herein again.

907: The second network element device sends a fourth BGP packet to the first network element device, where the fourth BGP packet carries the version information corresponding to the second network element device. For step 907, refer to the descriptions in step 408. Details are not described herein again.

908: The first network element device determines whether the version information corresponding to the second network element device matches version information corresponding to a remote attestation file. The first network element device checks the version information corresponding to the second network element device based on a parsing result of the fourth BGP packet. If the version information corresponding to the second network element device matches the version information corresponding to the remote attestation baseline file, step 909 continues to be performed; or if the version information corresponding to the second network element device does not match the version information corresponding to the remote attestation baseline file, the first network element device determines that remote attestation cannot be performed on the second network element device.

909: The first network element device and the second network element device establish a secure connection.

910: The first network element device sends a first BGP packet to the second network element device through the secure connection, to query the measurement information of the second network element device. For step 910, refer to the descriptions in step 401. Details are not described herein again.

911: The second network element device sends a second BGP packet to the first network element device through the secure connection, where the second BGP packet carries the measurement information of the second network element device. For step 911, refer to the descriptions in step 403. Details are not described herein again.

912: The first network element device compares a locally stored remote attestation baseline file and the measurement information that is of the second network element device and that is carried in the second BGP packet, to obtain a remote attestation result, where the remote attestation result indicates whether the second network element device is in a trusted state. For step 912, refer to the descriptions in step 405. Details are not described herein again.

In conclusion, in this embodiment of this application, remote attestation is performed on the second network element device by using the first network element device having the route reflection function and the BGP connection for route reflection. There is no need to deploy another additional device other than the first network element device and the second network element device to implement remote attestation, and there is no need to manually establish a dedicated connection. In this way, not only costs are reduced, but also remote attestation efficiency is improved.

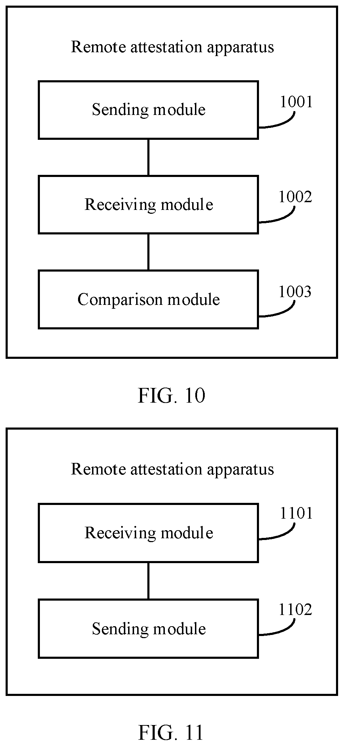

The foregoing describes the remote attestation method provided in the embodiments of this application. Corresponding to the method, an embodiment of this application further provides a remote attestation apparatus. The apparatus is used in a first network element device having a route reflection function, and a BGP connection for route reflection is established between the first network element device and a second network element device. The apparatus is configured to perform, by using modules shown in FIG. 10, the remote attestation method performed by the first network element device in FIG. 4, FIG. 7A and FIG. 7B, and FIG. 9A and FIG. 9B. As shown in FIG. 10, the remote attestation apparatus provided in this embodiment of this application includes the following modules.

A sending module 1001 is configured to send, by the first network element device, a first BGP packet to the second network element device through the BGP connection. The first BGP packet is used to query measurement information of the second network element device.

A receiving module 1002 is configured to: receive, by the first network element device through the BGP connection, a second BGP packet sent by the second network element device, and parse the second BGP packet to obtain the measurement information carried in the second BGP packet.

A comparison module 1003 is configured to compare, by the first network element device, the measurement information and a remote attestation baseline file, to obtain a remote attestation result.

In an example embodiment, the first BGP packet includes a first TLV field, and the first TLV field indicates to query the measurement information.

In an example embodiment, the first BGP packet is a first update packet, the first update packet includes a first path attribute field, and the first TLV field is located in the first path attribute field.

In an example embodiment, the second BGP packet includes a second TLV field, and the second TLV field is used to carry the measurement information.

In an example embodiment, the second BGP packet is a second update packet, the second update packet includes a second path attribute field, and the second TLV field is located in the second path attribute field.

In an example embodiment, the sending module 1001 is configured to: establish, by the first network element device, a secure connection to the second network element device through the BGP connection, and send the first BGP packet to the second network element device through the secure connection.

The receiving module 1002 is configured to receive, by the first network element device through the secure connection, the second BGP packet sent by the second network element device.

In an example embodiment, the secure connection includes a TLS connection or an IP Sec tunnel.

In an example embodiment, the sending module 1001 is configured to: in response to determining that the second network element device supports a remote attestation function, send, by the first network element device, a secure connection establishment request to the second network element device through the BGP connection, and establish the secure connection to the second network element device based on the secure connection establishment request.

In an example embodiment, that the second network element device supports the remote attestation function includes: version information corresponding to the second network element device matches version information corresponding to the remote attestation baseline file, and/or the second network element device has an address family extension capability.

In an example embodiment, the sending module 1001 is further configured to send, by the first network element device, a third BGP packet to the second network element device through the BGP connection. The third BGP packet indicates to query the version information corresponding to the second network element device.

The receiving module 1002 is further configured to: receive, by the first network element device through the BGP connection, a fourth BGP packet sent by the second network element device, and parse the fourth BGP packet to obtain the version information that corresponds to the second network element device and that is carried in the fourth BGP packet.

The apparatus further includes a first determining module, configured to: in response to that the version information corresponding to the second network element device is the same as the version information corresponding to the remote attestation baseline file, determine, by the first network element device, that the second network element device supports the remote attestation function.

In an example embodiment, the third BGP packet includes a third TLV field, and the third TLV field indicates to query the version information.

In an example embodiment, the third BGP packet is a third update packet, the third update packet includes a third path attribute field, and the third TLV field is located in the third path attribute field.

In an example embodiment, the fourth BGP packet includes a fourth TLV field, and the fourth TLV field is used to carry the version information corresponding to the second network element device.

In an example embodiment, the fourth BGP packet is a fourth update packet, the fourth update packet includes a fourth path attribute field, and the fourth TLV field is located in the fourth path attribute field.

In an example embodiment, the version information corresponding to the second network element device includes subversion information of at least one component in the second network element device, subversion information of any component in the at least one component includes at least one type of information in a software version and a hardware version, the fourth TLV field is used to carry an information list, the information list includes at least one information item, and any information item in the at least one information item includes a component name of the any component and subversion information of the any component.

In an example embodiment, the sending module 1001 is further configured to send, by the first network element device, a fifth BGP packet to the second network element device through the BGP connection. The fifth BGP packet is used to negotiate the address family extension capability with the second network element device.

The receiving module 1002 is further configured to receive, by the first network element device through the BGP connection, a sixth BGP packet sent by the second network element device.

The apparatus further includes a second determining module, configured to determine, based on the sixth BGP packet, that the second network element device has the address family extension capability, so that the second network element device supports the remote attestation function.

In an example embodiment, the fifth BGP packet includes at least one first capability subfield, any one of the at least one first capability subfield carries an address family identifier, and the address family identifier indicates an extended address family.

In an example embodiment, the fifth BGP packet is a first open packet, the first open packet includes a first optional parameter field, and the at least one first capability subfield is located in the first optional parameter field.

In an example embodiment, the sixth BGP packet includes at least one second capability subfield that carries an address family identifier.

In an example embodiment, a packet type of the sixth BGP packet is an open type, the sixth BGP packet includes a second optional parameter field, and in response to that the sixth BGP packet includes the at least one second capability subfield that carries an address family identifier, the at least one second capability subfield that carries an address family identifier is located in the second optional parameter field.

In an example embodiment, the second determining module is configured to: parse, by the first network element device, the sixth BGP packet; and in response to that the sixth BGP packet includes the at least one second capability subfield that carries an address family identifier, determine, by the first network element device, that the second network element device has the address family extension capability.

In an example embodiment, the remote attestation baseline file is received by the first network element device, or the remote attestation baseline file is generated by the first network element device based on measurement information of the first network element device.

For a detailed process in which the remote attestation apparatus shown in FIG. 10 serves as a first network element device and interacts with the second network element device, refer to the descriptions in the embodiments related to FIG. 1 and FIG. 2 and FIG. 4 to FIG. 9A and FIG. 9B. Details are not described herein again.

Corresponding to the foregoing method, an embodiment of this application further provides another remote attestation apparatus. The apparatus is used in a second network element device, a BGP connection for route reflection is established between the second network element device and a first network element device, and the first network element device has a route reflection function. The apparatus is configured to perform, by using modules shown in FIG. 11, the remote attestation method performed by the second network element device in FIG. 4, FIG. 7A and FIG. 7B, and FIG. 9A and FIG. 9B. As shown in FIG. 11, the remote attestation apparatus provided in this embodiment of this application includes the following modules.

A receiving module 1101 is configured to receive, by the second network element device through the BGP connection, a first BGP packet sent by the first network element device. The first BGP packet is used to query measurement information of the second network element device.

A sending module 1102 is configured to send, by the second network element device, a second BGP packet to the first network element device through the BGP connection. The second BGP packet carries the measurement information, so that the first network element device obtains a remote attestation result corresponding to the second network element device.

In an example embodiment, the first BGP packet includes a first TLV field, and the first TLV field indicates to query the measurement information.

In an example embodiment, the first BGP packet is a first update packet, the first update packet includes a first path attribute field, and the first TLV field is located in the first path attribute field.

In an example embodiment, the second BGP packet includes a second TLV field, and the second TLV field is used to carry the measurement information.

In an example embodiment, the second BGP packet is a second update packet, the second update packet includes a second path attribute field, and the second TLV field is located in the second path attribute field.

In an example embodiment, the receiving module 1101 is configured to: establish, by the second network element device, a secure connection to the first network element device through the BGP connection, and receive, through the secure connection, the first BGP packet sent by the first network element device.

The sending module 1102 is configured to send, by the second network element device, the second BGP packet to the first network element device through the secure connection.

In an example embodiment, the secure connection includes a TLS connection or an IP Sec tunnel.

In an example embodiment, the receiving module 1101 is configured to: receive, by the second network element device through the BGP connection, a secure connection establishment request sent by the first network element device, and establish a secure connection to the first network element device based on the secure connection establishment request.

In an example embodiment, version information corresponding to the second network element device matches version information corresponding to a remote attestation baseline file on the first network element device, and/or the second network element device has an address family extension capability, and the remote attestation baseline file is used to obtain a remote attestation result corresponding to the second network element device.

In an example embodiment, the receiving module 1101 is further configured to receive, by the second network element device through the BGP connection, a third BGP packet sent by the first network element device. The third BGP packet indicates to query the version information corresponding to the second network element device.

The sending module 1102 is further configured to send, by the second network element device, a fourth BGP packet to the first network element device through the BGP connection. The fourth BGP packet carries the version information corresponding to the second network element device.

In an example embodiment, the third BGP packet includes a third TLV field, and the third TLV field indicates to query the version information.

In an example embodiment, the third BGP packet is a third update packet, the third update packet includes a third path attribute field, and the third TLV field is located in the third path attribute field.

In an example embodiment, the fourth BGP packet includes a fourth TLV field, and the fourth TLV field is used to carry the version information corresponding to the second network element device.

In an example embodiment, the fourth BGP packet is a fourth update packet, the fourth update packet includes a fourth path attribute field, and the fourth TLV field is located in the fourth path attribute field.

In an example embodiment, the version information corresponding to the second network element device includes subversion information of at least one component in the second network element device, subversion information of any component in the at least one component includes at least one type of information in a software version and a hardware version, the fourth TLV field is used to carry an information list, the information list includes at least one information item, and any information item in the at least one information item includes a component name of the any component and subversion information of the any component.

In an example embodiment, the receiving module 1101 is further configured to receive, by the second network element device through the BGP connection, a fifth BGP packet sent by the first network element device. The fifth BGP packet is used to negotiate the address family extension capability with the first network element device.

The sending module 1102 is further configured to: generate, by the second network element device, a sixth BGP packet based on the address family extension capability of the second network element device, and send the sixth BGP packet to the first network element device through the BGP connection.

In an example embodiment, the fifth BGP packet includes at least one first capability subfield, any one of the at least one first capability subfield carries an address family identifier, and the address family identifier indicates an extended address family.

In an example embodiment, the fifth BGP packet is a first open packet, the first open packet includes a first optional parameter field, and the at least one first capability subfield is located in the first optional parameter field.

In an example embodiment, the sixth BGP packet includes at least one second capability subfield that carries an address family identifier, and the address family identifier indicates an extended address family.

In an example embodiment, a packet type of the sixth BGP packet is an open type, the sixth BGP packet includes a second optional parameter field, and in response to that the sixth BGP packet includes the at least one second capability subfield that carries an address family identifier, the at least one second capability subfield that carries an address family identifier is located in the second optional parameter field.

In an example embodiment, the sending module 1102 is configured to: in response to determining that the second network element device has the address family extension capability, send, by the second network element device to the first network element device, the sixth BGP packet including the at least one second capability subfield that carries an address family identifier.

In an example embodiment, the remote attestation baseline file is received by the first network element device, or the remote attestation baseline file is generated by the first network element device based on measurement information of the first network element device.

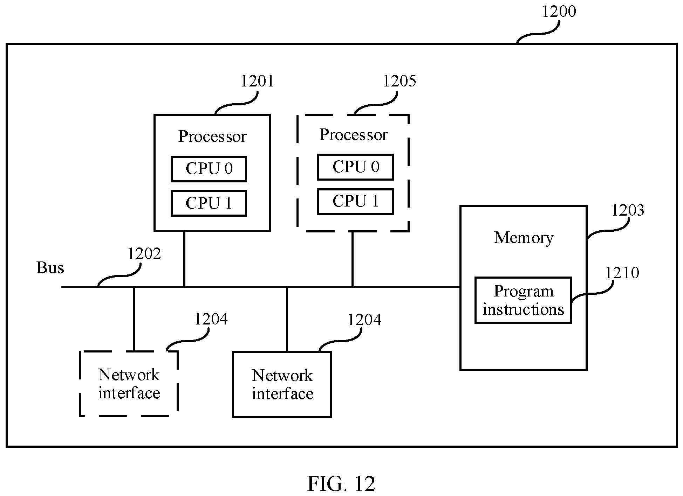

For a detailed process in which the remote attestation apparatus in a structure shown in FIG. 12 serves as a second network element device and interacts with the first network element device, refer to the descriptions in the embodiments related to FIG. 1 to FIG. 9A and FIG. 9B. Details are not described herein again.

In conclusion, in this embodiment of this application, remote attestation is performed on the second network element device by using the first network element device having the route reflection function and the BGP connection for route reflection. There is no need to deploy another additional device other than the first network element device and the second network element device to implement remote attestation, and there is no need to manually establish a dedicated connection. In this way, not only costs are reduced, but also remote attestation efficiency is improved.

It should be understood that, when the apparatuses provided in FIG. 10 and FIG. 11 implement functions of the apparatuses, division into the functional modules is merely used as an example for description. In an actual application, the foregoing functions may be allocated to different functional modules for implementation based on a requirement. In other words, an internal structure of a device is divided into different functional modules, to implement all or some of the functions described above. In addition, the apparatuses provided in the foregoing embodiments and the method embodiment pertain to a same concept. For a specific implementation process of the apparatuses, refer to the method embodiments. Details are not described herein again.

FIG. 12 is a schematic diagram of a structure of an example remote attestation device 1200 according to this application. The remote attestation device 1200 includes at least one processor 1201, a memory 1203, and at least one network interface 1204.

The processor 1201 is, for example, a general-purpose CPU, a digital signal processor (digital signal processor, DSP), a network processor (network processor, NP), a GPU, a neural-network processing unit (neural-network processing unit, NPU), a data processing unit (Data Processing Unit, DPU), a microprocessor, one or more integrated circuits or application-specific integrated circuits (application-specific integrated circuit, ASIC) that are configured to implement the solutions of this application, a programmable logic device (programmable logic device, PLD), another programmable logic device, a transistor logic device, a hardware component, or any combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor may implement or execute various logical blocks, modules, and circuits described with reference to content disclosed in this application. Alternatively, the processor may be a combination of processors implementing a computing function, for example, a combination of one or more microprocessors, or a combination of a DSP and a microprocessor.

Optionally, the remote attestation device 1200 further includes a bus 1202. The bus 1202 is configured to transmit information between components of the remote attestation device 1200. The bus 1202 may be a peripheral component interconnect (peripheral component interconnect, PCI for short) bus, an extended industry standard architecture (extended industry standard architecture, EISA for short) bus, or the like. Buses 1202 may be classified into an address bus, a data bus, a control bus, and the like. For ease of representation, only one thick line is used to represent the bus in FIG. 12, but this does not mean that there is only one bus or only one type of bus.

For example, the memory 1203 is a read-only memory (read-only memory, ROM) or another type of storage device that may store static information and instructions; or a random access memory (random access memory, RAM) or another type of dynamic storage device that may store information and instructions; or an electrically erasable programmable read-only memory (electrically erasable programmable read-only Memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a disk storage medium, another disk storage device, or any other medium that can be used to carry or store expected program code in an instruction or data structure form and that can be accessed by a computer. However, the memory 1203 is not limited thereto. For example, the memory 1203 exists independently, and is connected to the processor 1201 through the bus 1202. The memory 1203 may be alternatively integrated with the processor 1201.

The network interface 1204 is configured to communicate with another device or a communication network by using any transceiver-type apparatus. The communication network may be the Ethernet, a radio access network (radio access network, RAN), a wireless local area network (wireless local area network, WLAN), or the like. The network interface 1204 may include a wired network interface, and may further include a wireless network interface. Specifically, the network interface 1204 may be an Ethernet (Ethernet) interface, for example, a fast Ethernet (Fast Ethernet, FE) interface, a gigabit Ethernet (Gigabit Ethernet, GE) interface, an asynchronous transfer mode (Asynchronous Transfer Mode, ATM) interface, a WLAN interface, a cellular network interface, or a combination thereof. The Ethernet interface may be an optical interface, an electrical interface, or a combination thereof. In some implementations of this application, the network interface 1204 may be used by the remote attestation device 1200 to communicate with another device.

In a specific implementation, in some implementations, the processor 1201 may include one or more CPUs, for example, a CPU 0 and a CPU 1 shown in FIG. 12. Each of the processors may be a single-core processor, or may be a multi-core processor. The processor herein may be one or more devices, circuits, and/or processing cores configured to process data (for example, computer program instructions).

In a specific implementation, in some implementations, the remote attestation device 1200 may include a plurality of processors, for example, a processor 1201 and a processor 1205 shown in FIG. 12. Each of the processors may be a single-core processor, or may be a multi-core processor. The processor herein may be one or more devices, circuits, and/or processing cores configured to process data (for example, computer program instructions).

In some implementations, the memory 1203 is configured to store program instructions 1210 for executing the solutions of this application, and the processor 1201 may execute the program instructions 1210 stored in the memory 1203. That is, the remote attestation device 1200 may implement, by using the processor 1201 and the program instructions 1210 in the memory 1203, the remote attestation method provided in the method embodiments. The program instructions 1210 may include one or more software modules. Optionally, the processor 1201 may also store program instructions for executing the solutions of this application.

In a specific implementation process, the remote attestation device 1200 in this application may correspond to the first network element device or the second network element device configured to perform the foregoing methods. The processor 1201 in the remote attestation device 1200 reads the instructions in the memory 1203, so that the remote attestation device 1200 shown in FIG. 12 can perform all or some of the steps in the method embodiments.

The remote attestation device 1200 may further correspond to the apparatus shown in FIG. 10 or FIG. 11. Each functional module in the apparatus shown in FIG. 10 or FIG. 11 is implemented by using software of the remote attestation device 1200. In other words, the functional modules included in the apparatus shown in FIG. 10 or FIG. 11 are generated after the processor 1201 of the remote attestation device 1200 reads the program instructions 1210 stored in the memory 1203.

Steps of the remote attestation methods shown in FIG. 4, FIG. 7A and FIG. 7B, and FIG. 9A and FIG. 9B are completed by using an integrated logic circuit of hardware in the processor of the remote attestation device 1200 or by using instructions in a form of software. The steps in the method embodiments disclosed with reference to this application may be directly performed and completed by a hardware processor, or may be performed and completed by using a combination of hardware in the processor and a software module. The software module may be located in a mature storage medium in the art such as a random access memory, a flash memory, a read-only memory, a programmable read-only memory, an electrically erasable programmable memory, or a register. The storage medium is located in the memory, and the processor reads information in the memory, and completes the steps in the method embodiments in combination with hardware of the processor. To avoid repetition, details are not described herein again.

It should be understood that, the processor may be a central processing unit (Central Processing Unit, CPU), or may be another general-purpose processor, a digital signal processor (digital signal processor, DSP), an application-specific integrated circuit (application-specific integrated circuit, ASIC), a field-programmable gate array (field-programmable gate array, FPGA), or another programmable logic device, discrete gate or transistor logic device, discrete hardware component, or the like. The general-purpose processor may be a microprocessor or any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provides instructions and data to the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

In an example embodiment, an embodiment of this application provides a remote attestation system. The system includes a first remote attestation device and at least one second remote attestation device, the first remote attestation device has a route reflection function, and a border gateway protocol BGP connection for route reflection is established between the first remote attestation device and each of the at least one second remote attestation device. The first remote attestation device is configured to perform the method performed by the first network element device in FIG. 4, FIG. 7A and FIG. 7B, and FIG. 9A and FIG. 9B. Any one of the at least one second remote attestation device is configured to perform the remote attestation method performed by the second network element device in FIG. 4, FIG. 7A and FIG. 7B, and FIG. 9A and FIG. 9B.

In an example embodiment, an embodiment of this application provides a computer-readable storage medium. The computer-readable storage medium stores at least one instruction, and the instruction is loaded and executed by a processor, so that a computer implements a remote attestation method performed by a first network element device or a second network element device in FIG. 4, FIG. 7A and FIG. 7B, and FIG. 9A and FIG. 9B.

In an example embodiment, an embodiment of this application provides a computer program product. The computer program product includes a computer program or instructions, and the computer program or the instructions are executed by a processor, so that a computer implements a remote attestation method performed by a first network element device or a second network element device in FIG. 4, FIG. 7A and FIG. 7B, and FIG. 9A and FIG. 9B.

In an example embodiment, an embodiment of this application provides a chip, including a processor, configured to: invoke, from a memory, instructions stored in the memory, and run the instructions, so that a device in which the chip is installed performs a remote attestation method performed by a first network element device or a second network element device in FIG. 4, FIG. 7A and FIG. 7B, and FIG. 9A and FIG. 9B.

In an example embodiment, an embodiment of this application provides another chip, including an input interface, an output interface, a processor, and a memory. The input interface, the output interface, the processor, and the memory are connected through an internal connection path. The processor is configured to execute code in the memory, and when the code is executed, the processor is configured to perform a remote attestation method performed by a first network element device or a second network element device in FIG. 4, FIG. 7A and FIG. 7B, and FIG. 9A and FIG. 9B.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

The terms such as "first" and "second" in this application are used to distinguish between same or similar items with basically same roles and functions. It should be understood that there is no logical or timing dependency between "first", "second", and "n^{th}", and neither a quantity nor an execution order is limited. It should also be understood that although the terms such as first and second are used in the following description to describe various elements, these elements should not be limited by the terms. These terms are merely intended to distinguish one element from another.

It should be further understood that sequence numbers of the foregoing processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second devices means two or more second devices. In this specification, terms "system" and "network" may be used interchangeably.

It should be understood that the terms used in the descriptions of various examples in this specification are only intended to describe particular examples and are not intended to constitute a limitation. Singular forms "one ("a" and "an")" and "this" used in the description of various such examples and in the appended claims are also intended to include a plural form, unless otherwise specified in the context clearly.

It should be understood that, the term "and/or" used in this specification indicates and includes any or all possible combinations of one or more items in associated listed items. The term "and/or" describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "if" may be interpreted as a meaning "when" ("upon"), "in response to determining", or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, the measurement information in embodiments of this application is obtained when sufficient authorization is performed.

The foregoing descriptions are embodiments of this application, but are not intended to limit this application. Any modification, equivalent replacement, improvement, or the like made without departing from the principle of this application should fall within the protection scope of this application.

## Claims

1. A remote attestation method, wherein the method is applied to a first network element device having a route reflection function, a border gateway protocol BGP connection for route reflection is established between the first network element device and a second network element device, and the method comprises:
sending, by the first network element device, a first BGP packet to the second network element device through the BGP connection, wherein the first BGP packet is used to query measurement information of the second network element device;
receiving, by the first network element device through the BGP connection, a second BGP packet sent by the second network element device, and parsing the second BGP packet to obtain the measurement information carried in the second BGP packet; and
comparing, by the first network element device, the measurement information and a remote attestation baseline file, to obtain a remote attestation result.

2. The method according to claim 1, wherein the first BGP packet comprises a first type-length-value TLV field, and the first TLV field indicates to query the measurement information.

3. The method according to claim 2, wherein the first BGP packet is a first update packet, the first update packet comprises a first path attribute field, and the first TLV field is located in the first path attribute field.

4. The method according to any one of claims 1 to 3, wherein the second BGP packet comprises a second TLV field, and the second TLV field is used to carry the measurement information.

5. The method according to claim 4, wherein the second BGP packet is a second update packet, the second update packet comprises a second path attribute field, and the second TLV field is located in the second path attribute field.

6. The method according to any one of claims 1 to 5, wherein the sending, by the first network element device, a first BGP packet to the second network element device through the BGP connection comprises:
establishing, by the first network element device, a secure connection to the second network element device through the BGP connection, and sending the first BGP packet to the second network element device through the secure connection; and
the receiving, by the first network element device through the BGP connection, a second BGP packet sent by the second network element device comprises:
receiving, by the first network element device through the secure connection, the second BGP packet sent by the second network element device.

7. The method according to claim 6, wherein the secure connection comprises a transport layer security TLS connection or an internet protocol IP security Sec tunnel.

8. The method according to claim 6 or 7, wherein the establishing, by the first network element device, a secure connection to the second network element device through the BGP connection comprises:
in response to determining that the second network element device supports a remote attestation function, sending, by the first network element device, a secure connection establishment request to the second network element device through the BGP connection, and establishing the secure connection to the second network element device based on the secure connection establishment request.

9. The method according to claim 8, wherein that the second network element device supports the remote attestation function comprises:
version information corresponding to the second network element device matches version information corresponding to the remote attestation baseline file, and/or the second network element device has an address family extension capability.

10. The method according to claim 1 or 9, wherein before the sending, by the first network element device, a first BGP packet to the second network element device through the BGP connection, the method further comprises:
sending, by the first network element device, a third BGP packet to the second network element device through the BGP connection, wherein the third BGP packet indicates to query the version information corresponding to the second network element device;
receiving, by the first network element device through the BGP connection, a fourth BGP packet sent by the second network element device, and parsing the fourth BGP packet to obtain the version information that corresponds to the second network element device and that is carried in the fourth BGP packet; and
in response to that the version information corresponding to the second network element device is the same as the version information corresponding to the remote attestation baseline file, determining, by the first network element device, that the second network element device supports the remote attestation function.

11. The method according to claim 10, wherein the third BGP packet comprises a third TLV field, and the third TLV field indicates to query the version information.

12. The method according to claim 11, wherein the third BGP packet is a third update packet, the third update packet comprises a third path attribute field, and the third TLV field is located in the third path attribute field.

13. The method according to any one of claims 10 to 12, wherein the fourth BGP packet comprises a fourth TLV field, and the fourth TLV field is used to carry the version information corresponding to the second network element device.

14. The method according to claim 13, wherein the fourth BGP packet is a fourth update packet, the fourth update packet comprises a fourth path attribute field, and the fourth TLV field is located in the fourth path attribute field.

15. The method according to claim 13 or 14, wherein the version information corresponding to the second network element device comprises subversion information of at least one component in the second network element device, subversion information of any component in the at least one component comprises at least one type of information in a software version and a hardware version, the fourth TLV field is used to carry an information list, the information list comprises at least one information item, and any information item in the at least one information item comprises a component name of the any component and subversion information of the any component.

16. The method according to any one of claims 1 and 9 to 15, wherein before the sending, by the first network element device, a first BGP packet to the second network element device through the BGP connection, the method further comprises:
sending, by the first network element device, a fifth BGP packet to the second network element device through the BGP connection, wherein the fifth BGP packet is used to negotiate the address family extension capability with the second network element device; and
receiving, by the first network element device through the BGP connection, a sixth BGP packet sent by the second network element device, and determining, based on the sixth BGP packet, that the second network element device has the address family extension capability, so that the second network element device supports the remote attestation function.

17. The method according to claim 16, wherein the fifth BGP packet comprises at least one first capability subfield, any one of the at least one first capability subfield carries an address family identifier, and the address family identifier indicates an extended address family.

18. The method according to claim 17, wherein the fifth BGP packet is a first open packet, the first open packet comprises a first optional parameter field, and the at least one first capability subfield is located in the first optional parameter field.

19. The method according to any one of claims 16 to 18, wherein the sixth BGP packet comprises at least one second capability subfield that carries an address family identifier.

20. The method according to claim 19, wherein a packet type of the sixth BGP packet is an open type, the sixth BGP packet comprises a second optional parameter field, and in response to that the sixth BGP packet comprises the at least one second capability subfield that carries an address family identifier, the at least one second capability subfield that carries an address family identifier is located in the second optional parameter field.

21. The method according to claim 20, wherein the determining, based on the sixth BGP packet, that the second network element device has the address family extension capability comprises:
parsing, by the first network element device, the sixth BGP packet; and
in response to that the sixth BGP packet comprises the at least one second capability subfield that carries an address family identifier, determining, by the first network element device, that the second network element device has the address family extension capability.

22. The method according to any one of claims 1 to 21, wherein the remote attestation baseline file is received by the first network element device, or the remote attestation baseline file is generated by the first network element device based on measurement information of the first network element device.

23. A remote attestation method, wherein the method is applied to a second network element device, a border gateway protocol BGP connection for route reflection is established between the second network element device and a first network element device, the first network element device has a route reflection function, and the method comprises:
receiving, by the second network element device through the BGP connection, a first BGP packet sent by the first network element device, wherein the first BGP packet is used to query measurement information of the second network element device; and
sending, by the second network element device, a second BGP packet to the first network element device through the BGP connection, wherein the second BGP packet carries the measurement information, so that the first network element device obtains a remote attestation result corresponding to the second network element device.

24. The method according to claim 23, wherein the first BGP packet comprises a first type-length-value TLV field, and the first TLV field indicates to query the measurement information.

25. The method according to claim 24, wherein the first BGP packet is a first update packet, the first update packet comprises a first path attribute field, and the first TLV field is located in the first path attribute field.

26. The method according to any one of claims 23 to 25, wherein the second BGP packet comprises a second TLV field, and the second TLV field is used to carry the measurement information.

27. The method according to claim 26, wherein the second BGP packet is a second update packet, the second update packet comprises a second path attribute field, and the second TLV field is located in the second path attribute field.

28. The method according to any one of claims 23 to 27, wherein the receiving, by the second network element device through the BGP connection, a first BGP packet sent by the first network element device comprises:
establishing, by the second network element device, a secure connection to the first network element device through the BGP connection, and receiving, through the secure connection, the first BGP packet sent by the first network element device; and
the sending, by the second network element device, a second BGP packet to the first network element device through the BGP connection comprises:
sending, by the second network element device, the second BGP packet to the first network element device through the secure connection.

29. The method according to claim 28, wherein the secure connection comprises a transport layer security TLS connection or an internet protocol IP security Sec tunnel.

30. The method according to claim 28 or 29, wherein the establishing, by the second network element device, a secure connection to the first network element device through the BGP connection comprises:
receiving, by the second network element device through the BGP connection, a secure connection establishment request sent by the first network element device, and establishing a secure connection to the first network element device based on the secure connection establishment request.

31. The method according to claim 30, wherein version information corresponding to the second network element device matches version information corresponding to a remote attestation baseline file on the first network element device, and/or the second network element device has an address family extension capability, and the remote attestation baseline file is used to obtain a remote attestation result corresponding to the second network element device.

32. The method according to claim 23 or 31, wherein before the receiving, by the second network element device through the BGP connection, a first BGP packet sent by the first network element device, the method further comprises:
receiving, by the second network element device through the BGP connection, a third BGP packet sent by the first network element device, wherein the third BGP packet indicates to query the version information corresponding to the second network element device; and
sending, by the second network element device, a fourth BGP packet to the first network element device through the BGP connection, wherein the fourth BGP packet carries the version information corresponding to the second network element device.

33. The method according to claim 32, wherein the third BGP packet comprises a third TLV field, and the third TLV field indicates to query the version information.

34. The method according to claim 33, wherein the third BGP packet is a third update packet, the third update packet comprises a third path attribute field, and the third TLV field is located in the third path attribute field.

35. The method according to any one of claims 32 to 34, wherein the fourth BGP packet comprises a fourth TLV field, and the fourth TLV field is used to carry the version information corresponding to the second network element device.

36. The method according to claim 35, wherein the fourth BGP packet is a fourth update packet, the fourth update packet comprises a fourth path attribute field, and the fourth TLV field is located in the fourth path attribute field.

37. The method according to claim 35 or 36, wherein the version information corresponding to the second network element device comprises subversion information of at least one component in the second network element device, subversion information of any component in the at least one component comprises at least one type of information in a software version and a hardware version, the fourth TLV field is used to carry an information list, the information list comprises at least one information item, and any information item in the at least one information item comprises a component name of the any component and subversion information of the any component.

38. The method according to any one of claims 23 and 31 to 37, wherein before the receiving, by the second network element device through the BGP connection, a first BGP packet sent by the first network element device, the method further comprises:
receiving, by the second network element device through the BGP connection, a fifth BGP packet sent by the first network element device, wherein the fifth BGP packet is used to negotiate the address family extension capability with the first network element device; and
generating, by the second network element device, a sixth BGP packet based on the address family extension capability of the second network element device, and sending the sixth BGP packet to the first network element device through the BGP connection.

39. The method according to claim 38, wherein the fifth BGP packet comprises at least one first capability subfield, any one of the at least one first capability subfield carries an address family identifier, and the address family identifier indicates an extended address family.

40. The method according to claim 39, wherein the fifth BGP packet is a first open packet, the first open packet comprises a first optional parameter field, and the at least one first capability subfield is located in the first optional parameter field.

41. The method according to any one of claims 38 to 40, wherein the sixth BGP packet comprises at least one second capability subfield that carries an address family identifier, and the address family identifier indicates an extended address family.

42. The method according to claim 41, wherein a packet type of the sixth BGP packet is an open type, the sixth BGP packet comprises a second optional parameter field, and in response to that the sixth BGP packet comprises the at least one second capability subfield that carries an address family identifier, the at least one second capability subfield that carries an address family identifier is located in the second optional parameter field.

43. The method according to claim 42, wherein the generating, by the second network element device, a sixth BGP packet based on the address family extension capability of the second network element device comprises:
in response to determining that the second network element device has the address family extension capability, sending, by the second network element device to the first network element device, the sixth BGP packet comprising the at least one second capability subfield that carries an address family identifier.

44. The method according to any one of claims 31 to 43, wherein the remote attestation baseline file is received by the first network element device, or the remote attestation baseline file is generated by the first network element device based on measurement information of the first network element device.

45. A remote attestation apparatus, wherein the apparatus is used in a first network element device having a route reflection function, a border gateway protocol BGP connection for route reflection is established between the first network element device and a second network element device, and the apparatus comprises:
a sending module, configured to send, by the first network element device, a first BGP packet to the second network element device through the BGP connection, wherein the first BGP packet is used to query measurement information of the second network element device;
a receiving module, configured to: receive, by the first network element device through the BGP connection, a second BGP packet sent by the second network element device, and parse the second BGP packet to obtain the measurement information carried in the second BGP packet; and
a comparison module, configured to compare, by the first network element device, the measurement information and a remote attestation baseline file, to obtain a remote attestation result.

46. The apparatus according to claim 45, wherein the sending module is configured to: establish, by the first network element device, a secure connection to the second network element device through the BGP connection, and send the first BGP packet to the second network element device through the secure connection; and
the receiving module is configured to receive, by the first network element device through the secure connection, the second BGP packet sent by the second network element device.

47. The apparatus according to claim 46, wherein the sending module is configured to: in response to determining that the second network element device supports a remote attestation function, send, by the first network element device, a secure connection establishment request to the second network element device through the BGP connection, and establish the secure connection to the second network element device based on the secure connection establishment request.

48. The apparatus according to claim 47, wherein that the second network element device supports a remote attestation function comprises: version information corresponding to the second network element device matches version information corresponding to the remote attestation baseline file, and/or the second network element device has an address family extension capability.

49. The apparatus according to claim 45 or 48, wherein the sending module is further configured to send, by the first network element device, a third BGP packet to the second network element device through the BGP connection, wherein the third BGP packet indicates to query the version information corresponding to the second network element device;
the receiving module is further configured to: receive, by the first network element device through the BGP connection, a fourth BGP packet sent by the second network element device, and parse the fourth BGP packet to obtain the version information that corresponds to the second network element device and that is carried in the fourth BGP packet; and
the apparatus further comprises a first determining module, configured to: in response to that the version information corresponding to the second network element device is the same as the version information corresponding to the remote attestation baseline file, determine, by the first network element device, that the second network element device supports the remote attestation function.

50. The apparatus according to any one of claims 45, 48, and 49, wherein the sending module is further configured to send, by the first network element device, a fifth BGP packet to the second network element device through the BGP connection, wherein the fifth BGP packet is used to negotiate the address family extension capability with the second network element device;
the receiving module is further configured to receive, by the first network element device through the BGP connection, a sixth BGP packet sent by the second network element device; and
the apparatus further comprises a second determining module, configured to determine, based on the sixth BGP packet, that the second network element device has the address family extension capability, so that the second network element device supports the remote attestation function.

51. A remote attestation apparatus, wherein the apparatus is used in a second network element device, a border gateway protocol BGP connection for route reflection is established between the second network element device and a first network element device, the first network element device has a route reflection function, and the apparatus comprises:
a receiving module, configured to receive, by the second network element device through the BGP connection, a first BGP packet sent by the first network element device, wherein the first BGP packet is used to query measurement information of the second network element device; and
a sending module, configured to send, by the second network element device, a second BGP packet to the first network element device through the BGP connection, wherein the second BGP packet carries the measurement information, so that the first network element device obtains a remote attestation result corresponding to the second network element device.

52. The apparatus according to claim 51, wherein the receiving module is configured to: establish, by the second network element device, a secure connection to the first network element device through the BGP connection, and receive, through the secure connection, the first BGP packet sent by the first network element device; and
the sending module is configured to send, by the second network element device, the second BGP packet to the first network element device through the secure connection.

53. The apparatus according to claim 51, wherein the receiving module is further configured to receive, by the second network element device through the BGP connection, a third BGP packet sent by the first network element device, wherein the third BGP packet indicates to query the version information corresponding to the second network element device; and
the sending module is further configured to send, by the second network element device, a fourth BGP packet to the first network element device through the BGP connection, wherein the fourth BGP packet carries the version information corresponding to the second network element device.

54. The apparatus according to claim 51 or 53, wherein the receiving module is further configured to receive, by the second network element device through the BGP connection, a fifth BGP packet sent by the first network element device, wherein the fifth BGP packet is used to negotiate the address family extension capability with the first network element device; and
the sending module is further configured to: generate, by the second network element device, a sixth BGP packet based on the address family extension capability of the second network element device, and send the sixth BGP packet to the first network element device through the BGP connection.

55. A remote attestation device, wherein the device comprises a memory and a processor, the memory stores at least one instruction, and the at least one instruction is loaded and executed by the processor, so that the remote attestation device implements the remote attestation method according to any one of claims 1 to 44.

56. A remote attestation system, wherein the system comprises a first remote attestation device and at least one second remote attestation device, the first remote attestation device has a route reflection function, a border gateway protocol BGP connection for route reflection is established between the first remote attestation device and each of the at least one second remote attestation device, the first remote attestation device is configured to perform the remote attestation method according to any one of claims 1 to 22, and any one of the at least one second remote attestation device is configured to perform the remote attestation method according to any one of claims 23 to 44.

57. A computer-readable storage medium, wherein the computer-readable storage medium stores at least one instruction, and the instruction is loaded and executed by a processor, so that a computer implements the remote attestation method according to any one of claims 1 to 44.

58. A computer program product, wherein the computer program product comprises a computer program or instructions, and the computer program or the instructions are executed by a processor, so that a computer implements the remote attestation method according to any one of claims 1 to 44.
